# EUROPÄISCHE PATENTSCHRIFT

(11) **EP 3 744 519 B1**
(45) Veröffentlichungstag und Bekanntmachung des Hinweises auf die Patenterteilung: **13.12.2023**
(21) Anmeldenummer: 20172671.8
(22) Anmeldetag: 04.05.2020
(51) Int. Cl.: B32B 5/02, B32B 11/10, B32B 25/08, B32B 27/12, B32B 27/30, B32B 27/32, D06N 5/00, E04D 5/06, E04D 5/10, B32B 7/12, B32B 27/20

(54) **ABDECKSCHICHTSYSTEM SOWIE VERFAHREN ZUM HERSTELLEN EINES SOLCHEN**
COVERING SYSTEM AND METHOD FOR MANUFACTURING THE SAME
SYSTÈME DE COUCHE DE RECOUVREMENT ET PROCÉDÉ DE FABRICATION D'UN TEL SYSTÈME

(30) Priorität: 03.05.2019 DE 102019111483
(43) Veröffentlichungstag der Anmeldung: 02.12.2020
(73) Patentinhaber: BMI Group Holdings UK Limited, Reading, Berkshire RG1 1LX (GB)
(72) Erfinder: SIMONIS, Udo, 63549 Ronneburg (DE); GLÜCK, Johannes, 97762 Hammelburg (DE)
(74) Vertreter: Stoffregen, Hans-Herbert

(56) Entgegenhaltungen:
- EP-A1- 1 741 551
- WO-A1-2018/210667
- DE-A1-102005 039 543
- DE-A1-102016 107 418
- DE-U1- 29 501 245

## Beschreibung

Die Erfindung bezieht sich auf ein Abdeckschichtsystem, umfassend eine ein- oder mehrschichtige Deckbahn auf Kunststoffbasis, wie Dachbahn, eine mit dieser verbundenen Vliesschicht sowie eine mit dieser verbundene bituminöse Klebstoffschicht oder aus diesen bestehend.

Um insbesondere Gebäudeflächen gegen Witterungseinflüsse zu schützen, werden entsprechende Abdeckschichtsysteme eingesetzt, durch die die Gebäudeflächen abgedichtet werden. Dabei können Dachbahnen bildende Deckbahnen entweder unmittelbar mit einer Klebstoffschicht versehen werden oder aber ein Schichtsystem gelangt zur Anwendung, das ein Vlies und Klebstoffschicht umfasst, wobei das Vlies üblicherweise über eine Haftvermittlerschicht mit der Dachbahn verbunden ist.

Werden die Dachbahnen unmittelbar mit einer Klebstoffschicht versehen, so gelangen butylbasierte Klebstoffmassen, Acrylatklebstoffe oder bituminöse Massen zum Einsatz.

Bei Einsatz eines Vlieses werden Haftschmelzklebstoffe, sogenannte Hot Melt Pressure Sensitive Adhesives (HMPSA), eingesetzt, die Kautschuk-basierte Materialien oder vernetzte Acrylate bzw. UV-Acrylate sein können.

Ein Abdichtschichtsystem ist der EP 1 741 551 B1 zu entnehmen. Die Vliesschicht ist mit der Deckbahn bevorzugt über eine Haftvermittlerschicht verbunden. Die Vliesschicht selbst besteht aus einer imprägnierten Faserstoffschicht, die mit einem Fluorkunststoff als migrationshemmendes Mittel imprägniert ist.

Die DE 10 2005 039 543 A1 beschreibt einen Dreischichtaufbau für ein Dachabdichtungssystem, das ein Glasvlies aufweist.

Gegenstand der DE 10 2016 107 418 A1 ist ein Abdecklaminat mit zumindest einer Sperrschicht, die eine Migration von Ölen aus einem bituminösen Schmelzkleber in die Deckschicht und von Weichmachern aus der Deckschicht unterbindet.

Aus der DE 295 03 133 U1 ist eine Dichtungsbahn mit einem dreischichtigen Aufbau bekannt, die einen mit Bitumen oder Polymerbitumen getränkten Träger aufweist, der beidseitig von einer aus Bitumen oder Polymerbitumen bestehenden Deckschicht versehen ist. Dabei ist die einer Unterlage zugewandte Schicht selbstklebend ausgebildet.

Ein Unterdachmaterial nach der US 4,342,804 A weist ein aus Polypropylen bestehendes Vlies auf, das auf einer Seite mit Bitumen beschichtet ist.

Der DE 10 2016 107 418 A1 ist ein gattungsbildendes Abdecklaminat bzw. -schichtsystem zu entnehmen.

Gegenstand der DE 295 01 245 U1 ist ein bahnförmiges Isoliermaterial, das eine Glasarmierung in Form eines Glasfaservlieses aufweist.

Eine Dachabdeckungsbahn mit einem Träger aus Glasvlies ist aus der DE 10 2005 039 543 A1 bekannt.

Eine Dachbahn nach der EP 1 741 551 A1 weist eine migrationshemmende Sperrschicht auf.

Eine mehrschichtige Dichtungsbahn mit einer Kombinationsträgereinlage, die eine Glasverstärkung aufweist, ist aus der WO 2018/210667 A1 bekannt.

Der vorliegenden Erfindung liegt die Aufgabe zugrunde, ein Abdeckschichtsystem sowie ein Verfahren zum Herstellen eines solchen derart weiterzubilden, dass das Abdeckschichtsystem sicherstellt, dass durch Migration von Bitumen in die Deckbahn, wie Dachbahn, Verfärbungen oder Versprödungen aufgrund von Unverträglichkeiten unterbleiben. Auch sollen unebene Untergründe problemlos abgedeckt werden können.

Ein Ablösen der Deckbahn von der Vliesschicht soll mit einfachen Maßnahmen ausgeschlossen werden.

Zur Lösung der Aufgabe wird im Wesentlichen vorgeschlagen, dass das Abdeckschichtsystem eine gesonderte Sperrfolie nicht aufweist, und dass die Vliesschicht zumindest eine Vliesschicht aus der Gruppe mechanisch verfestigte Vliesschicht auf Synthesefasernbasis oder eine Kombination einer mechanisch verfestigten Vliesschicht auf Synthesefasernbasis und einer Glasfaservliesschicht oder eine Vliesschicht aus Synthesefasern und Glasfasern ist oder diese enthält, wobei die Vliesschicht mit der Deckbahn durch Eindringen von Material der Deckbahn mit dieser verbunden ist. Hierzu ist insbesondere vorgesehen, dass die Deckbahn eine geringere Wärmefestigkeit bzw. einen niedrigeren Schmelzpunkt als die Vliesschicht aufweist.

Überraschenderweise hat sich gezeigt, dass bei einem entsprechenden Schichtaufbau eine Migration von Bitumen enthaltener Klebstoffschicht in die Deckschicht und aus der Deckschicht Weichmacher in die Klebstoffschicht unterbunden wird oder im Wesentlichen unterbunden wird, ohne dass es entsprechend der DE 10 2016 107 418 A1 einer gesonderten Sperrschicht bedarf.

Um eine hohe mechanische Beständigkeit zu erzielen, ist insbesondere vorgesehen, dass die Deckschicht mehrschichtig, jedoch mindestens dreischichtig ausgebildet ist, wobei eine der Schichten eine Verstärkungsschicht ist.

In Hinblick auf die Verlegung auf Dachflächen werden selbstklebende Bahnen meist exponiert verlegt, d.h. es gibt keine Ballastschicht oder Begrünung, welche die eigentliche Deckschicht abdeckt bzw. bedeckt. Entsprechend haben Schadensfälle der Vergangenheit, z.B. aus dem Jahre 2012, aufgezeigt, dass homogene Deckschichten anfällig für das sogenannte "Shattering"-Verhalten sind. Shattering bedeutet in jenem Anwendungsfall das glasartige Zerspringen von Kunststoffdachbahnen. Eine verstärkte Schicht bietet in diesem Falle eine größere Sicherheit, dieses Verhalten zu unterbinden.

Des Weiteren ist hervorzuheben, dass die bituminöse Klebstoffschicht einen Anteil an Bitumen zwischen 60 Gew.-% und 80 Gew.-% aufweist.

Ferner kann die Klebstoffschicht 5 Gew.-% bis 30 Gew.-% an verzweigten und/oder unverzweigten Copolymeren basierend auf Styrol und Butadien und/oder Isopren enthalten. Gegebenenfalls kann ein Kohlenwasserstoffharz enthalten sein, maximal jedoch bis zu 15 Gew.-%. Der Anteil von Kohlenwasserstoffharz kann folglich 0 Gew.-% oder bis maximal 15 Gew.-% betragen.

Mechanische verfestigte Vliese können entweder durch Vernadelung - sogenannte Nadelvliese - durch Wasserstrahlverfestigung - sogenannte Wasserstrahlvliese - und/oder Kalandrierung hergestellt werden.

Im Folgenden wird mittels "Nadelvlies" die geläufigste Art des mechanisch verfestigten Vlieses genannt, was jedoch kalandrierte und/oder wasserstrahlverfestigte Vliese nicht ausschließt und die gezeigten Eigenschaften sowie Vorteile ebenfalls übertragbar sind. Insoweit ist das kalandrierte Vlies, das wasserstrahlverfestigte Vlies und das Nadelvlies unter mechanisch verfestigtes Vlies zu subsummieren.

Insbesondere kann die mechanisch verfestigte Vliesschicht auch basieren auf Polyethylen (PE), Polypropylen (PP), Polyacrilnitril (PAN), Viskose, Polyamid (PA), Copolymeren, Bikomponenten und dem Fachmann geläufigen Kunststoffsorten, welche für den Einsatz als Vlies möglich sind. Ebenfalls sind Kombinationen verschiedener Kunststoffe möglich, z.B. Bikomponenten aus Polyester (PES) und Polypropylen (PP) oder auch Fasermischungen.

Besonders hervorzuheben ist ein Gemisch aus Polyester (PES) und Polypropylen (PP). Neben diesen Kunststofffasern kann die Vliesschicht auch Glasfasern enthalten.

In Ausfiihrungsformen können Vliese hergestellt werden im Trockenvliesverfahren, dies bedeutet durch Luftlegung oder Krempeln, oder Spinnvliesverfahren, dies bedeutet durch Extrusion aus Granulaten, bevorzugt, welche in weiteren Schritten mittels mechanischer Verfestigung veredelt werden können.

Ein Nadelvlies wird allgemein gebildet mittels mechanischer Vliesbildung, dem sogenannten Krempel oder Karden. Hier werden in Maschinen mit rotierenden Zylindern Stapelfasern zu einem Vlies breit ausgelegt. Es kann eine Richtungsorientierung erreicht werden, ebenfalls ist durch das Aufbringen mehrerer Schichten (Mehrfachlagen) eine erhöhte Dicke bzw. Grammatur möglich. In einem weiteren Schritt folgt das Vernadeln. Hier wird das Vlies durch wiederholtes Einstechen von Wiederhakennadeln verfestigt und verdichtet. Hierdurch kann ohne Binder (binderfrei) eine möglichst gleichmäßige und strukturierte Verhakung und Verschlingung der Fasern dreidimensional erreicht werden. Während des Vernadelns können fast glatte und streifenfreie als auch strukturierte und gemusterte Oberflächen erreicht werden.

In weiterer Ausgestaltung können Vliese auch mittels chemischer Verfestigung, d.h. durch die Zugabe von Bindemitteln, und/oder durch thermische Verfestigung, d.h. durch beheizte Walzen oder durch heißen Luftstrom, hergestellt und veredelt werden. Auch können so verschiedene Vliese oder Vliestypen mit einem Nadelvlies verbunden werden.

In weiterer Ausgestaltung können mechanisch verfestigte Vlies, insbesondere Nadelvliese, auch mit den genannten Verfahren - chemische und thermische Verfestigung - kombiniert werden, um erhöhte Festigkeiten im Vlies(stoff) oder glattere Oberflächen bzw. andere Oberflächenbeschaffenheiten herzustellen.

Bevorzugterweise ist die Materialbasis des mechanisch verfestigten Vlieses Polyester aufgrund der folgenden Vorteile:
- Niedrigste Dichte aller Fasern 0,91 g/ccm
- Geringe Wärmeleitfähigkeit
- Hohe Beständigkeit gegen Säuren und Laugen
- Hohe Abriebfestigkeit
- Geringe Anschmutzbarkeit
- Geringe elektrostatische Aufladung
- Geringe Feuchtigkeitsaufnahme
- Hohe Beständigkeit gegenüber Mikroorganismen

Die Vliesschicht zeigt den Vorteil, dass diese die Funktion einer Pufferschicht oder Sperrschicht gegenüber dem bituminösen Material erfüllt mit der Folge, dass Verfärbungen und Versprödungen in der Deckbahn auch nach jahrelangem Einsatz des Abdeckschichtsystems unterbleiben.

Weiterhin bildet die Vliesschicht eingesetzt zwischen Klebstoffschicht und Deckschicht eine Art Dämpfungslage, welche sich positiv auf das Verhalten der Beständigkeit gegenüber Hagelschlag oder Perforation der Deckschicht auswirkt. Eine punktförmige Belastung hat zur Folge, dass die Deckschicht entsprechend verformt wird und die größte Belastung in der Unterseite der Deckschicht auftritt. Im Falle eines Hagelschlags entsteht eine ebensolche punktförmige Belastung. Wird diese punktförmige Belastung größer als die maximale (Zug-)Festigkeit bzw. maximale Dehnung des eingesetzten Materials der Deckschicht, so entstehen Risse. Diese Risse treten vorzugsweise an der Unterseite der Deckschicht auf und können entsprechend von einer außenstehenden Person bzw. einem Betrachter, welcher nur die Oberfläche der Deckbahn sieht und beurteilen kann, nicht erkannt werden. Entsprechend können so auftretende Hagelschlagschäden erst nach mehreren Tagen, Wochen oder Monaten erkannt werden, also erst dann, wenn ein Riss in die Oberseite der Deckschicht durch thermische Kontraktion und abwechselnd auftretende Dehnung an die Oberfläche der Deckschicht wandert. Eine eingesetzte Vliesschicht kann in diesem Fall als Art Dämpfungslage fungieren, indem sie einen Großteil der Energie des fallenden Gegenstands, z.B. eines Hagelkorns, als Wärme und Verformungsenergie aufnimmt und die hieraus resultierende übrige Kraft für die Deckschicht, welche die Verformung der Deckschicht zur Folge hat, verringert. Entsprechend erhöht bzw. verbessert sich die Beständigkeit gegenüber Hagelschlag und Perforation.

Die Vliesschicht ermöglicht des Weiteren, dass unebene Untergründe zusammen mit der bituminösen Klebstoffschicht egalisiert werden, also die Funktion einer Ausgleichsschicht besitzt, so dass die Klebstoffschicht ein geringeres Flächengewicht aufweisen kann. Daher ist insbesondere vorgesehen, dass die bituminöse Klebstoffschicht eine Grammatur G_{B} mit 100 g/m² ≤ G_{B} ≤ 1000 g/m², insbesondere 500 g/m² ≤ G_{B} 750 g/m², aufweist. Bevorzugterweise beträgt das Flächengewicht 600 g/m² bis 700 g/ m², insbesondere zwischen 630 g/ m² und 670 g/ m².

Die Vlies - insbesondere die Nadelvliesschicht - ermöglicht des Weiteren eine klebefähige Oberfläche für den aufgebrachten bituminösen Klebstoff. Je nach Vorbehandlung kann die Oberfläche des Vlieses offenporiger oder geschlossener sein. Entsprechend der Offenporigkeit des Vlieses wird die Klebstoffmasse umso tiefer in das Vlies eindringen. Je tiefer der Klebstoff eindringt, desto mehr Klebstoffmasse wird benötigt, um die Klebeeigenschaften konstant zu halten. Bevorzugt ist eine glatte, relativ geschlossene Oberfläche des Vlieses, um ein tiefes Eindringen des Klebstoffs zu umgehen.

Bevorzugterweise sollte nicht mehr als 300 g/m² Klebstoff in das Vlies ab einem Klebstoffauftragsgewicht ab 500 g/m² eindringen. Sollte die effektiv verfügbare, d.h. die Klebstoffschicht, welche außerhalb der Vliesschicht liegt, kleiner als 100 g/m² sein, so ist dies für eine sichere Verbindung mit dem Substrat (Dachuntergrund) nicht ausreichend.

Insbesondere sollte die Dicke D_{B} der Klebstoffschicht zwischen 0,10 mm und 1,00 mm, insbesondere zwischen 0,50 mm und 0,75 mm, liegen.

Durch die Verwendung des bituminösen Klebstoffs können problemlos Temperaturen im Bereich zwischen 80 °C und 90 °C, im Extremfall sogar bis 110°C auf das Abdeckschichtsystem einwirken, ohne dass die Wirkung nachlässt. Auch kann das bituminöse Klebstoffmaterial gegebenenfalls reaktiviert werden, in dem die Oberfläche thermisch vorbehandelt wird.

Vorteil der bituminösen Klebstoffschicht ist auch, dass durch die Alterung ein Verstrammen bzw. Erhärten der Masse stattfindet, wodurch eine erhöhte Festigkeit bzw. Kohäsion des Klebstoffs gegeben ist mit der Folge, dass die Haftwerte zwischen dem Untergrund und den weiteren Schichten des Abdeckschichtsystems ansteigen, ein Verschieben der Schichten nicht erfolgt und die Verbindung zum Untergrund derart fest ist, dass von einer Windsogsicherung gesprochen werden kann. Weiterhin wird durch ein Verstrammen des Klebstoffs ebenfalls die Wärmestandfestigkeit verbessert, d.h., dass der Klebstoff auch bei senkrechtem Auftrag bzw. Applizieren schlechter verrutschen wird.

Des Weiteren erhöht sich bei steigender Temperatur des Abdeckschichtsystems und somit des Klebstoffs auch die Fließfähigkeit, so dass die Benetzung des Klebstoffs zum Untergrund bzw. Substrat verbessert wird. Dies bedeutet im Wesentlichen, dass der Klebstoff evtl. vorhandene Hohlräume schließt bzw. füllt und sich unebenen Untergründen bzw. Substraten angleicht bzw. egalisiert, um somit die Adhäsionskraft zum Untergrund zu erhöhen.

Da zusätzliche Klebstoffe zum Verbinden der Vliesschicht und der Deckbahn nicht erforderlich sind, ist ein problemloses Recycling möglich, wobei ein Trennen zwischen der Vliesschicht zusammen mit der bituminösen Klebstoffschicht von der Deckbahn möglich ist. Folglich ist eine Sondermüllentsorgung nicht erforderlich. Somit kann die bituminöse Masse für weitere Bitumeneinsatzzwecke genutzt werden, zum Beispiel für Bitumenbahnen.

In einer weiteren Ausführungsform kann es sich bei genanntem Vlies um ein spaltbares Vlies - auch Spaltvlies genannt - handeln. Dies bedeutet, dass das Vlies aus mehreren Schichten besteht. Durch zuvor eingestellten Zug- bzw. Schälkräften lässt sich das Versagen bzw. das (Auf-)Schälen der Schichten einstellen, dies bedeutet ein Schälkraftwiderstand bzw. interlaminare Haftung bzw. innere Festigkeit der einzelnen Schichten muss überschritten werden, damit die Schichten sich trennen. In diesem Aufbau können verschiedene Verfestigungen (mechanisch, chemisch oder thermisch) kombiniert werden. Dieses Verfahren ist bereits für Tapeten bekannt und ermöglicht hierbei ein einfaches Abziehen vom Untergrund im trockenen Zustand. Angewendet im Sinne eines Abdecksystems wäre hier im Falle einer Renovierung oder Restaurierung eines verklebten Dachaufbaus die Möglichkeit die Deckbahn inkl. Vlies, zumindest der Hauptmenge bzw. -dicke, von der Klebemasse zu trennen und eine sortenreiche Trennung bzw. sortenreiche stoffliche Trennung der Bestandteile zu ermöglichen.

Weiterhin wäre es in genannter Ausführungsform mittels des Spaltvlieses möglich, dass, nachdem die Deckbahn inklusive der Hauptkomponenten des Vlieses bzw. die Hauptdicke des Vlieses abgetrennt sind, Restvlies sowie auf dem Substrat (Untergrund) befestigter Klebstoff bzw. der Klebstoffmasse verbleibt, so dass ein sauberer, verlegereifer Untergrund für eine erneute Verlegung zur Verfügung steht. Das separierte Restvlies mit dem anhaftenden auf dem Substrat befestigten Klebstoff wird auf dem Substrat verbleiben. Für einen neuen Klebstoffauftrag oder eine Verlegung könnte gegebenenfalls ein Primer aufgebracht werden, um die Haftung zu erhöhen, ist aber nicht zwingend erforderlich. Das zurückbleibende Vlies wäre je nach Zusammensetzung bereits als Trennschicht für einen nachfolgenden Aufbau verwendbar.

Bei Verwendung eines spaltbaren Vlieses können auch verschiedene Materialien von Vliesen kombiniert werden, dies bedeutet vor allem Synthese- und Glasfaservliese.

Insbesondere besteht die bituminöse bzw. enthält die bituminöse Klebeschicht:
- Bitumen, insbesondere 500/650 (gemäß DIN EN 12591), also Straßenbaubitumen,
- verzweigte und/oder unverzweigte Copolymere bzw. Blockcopolymere bzw. thermoplastische Elastomere basierend auf Styrol und Butadien und/oder Isopren, wie z.B. Styrol-Butadien-Copolymer (SBR), Styrol-Butadien-Styrol (SBS) oder Styrol-Ethylen-Butylen-Styrol (SEBS), Styrol-Isopren-Styrol (SIS),
- gegebenenfalls Kohlenwasserstoffharz und/oder Fluxöl.

Der Anteil von Bitumen kann zwischen 60 Gew.-% und 80 Gew.-%, und/oder der Anteil von verzweigten und/oder unverzweigten Copolymeren bzw. Blockcopolymeren bzw. thermoplastischen Elastomeren basierend auf Styrol und Butadien und/oder Isopren zwischen 5 Gew.-% und 30 Gew.-%, und/oder der Anteil von Kohlenwasserstoffharz und/oder Fluxöl zwischen 0 Gew.-% und 15 Gew.-% liegen. Der Anteil von Kohlenwasserstoffharz und/oder Fluxöl kann auch 0 Gew.-% betragen.

In weiteren Ausführungsformen können die bituminöse Klebstoffmasse ebenfalls aus B200 Bitumen (früher auch als 220/160 bezeichnet) sowie Fluxölen (teilweise) bestehen oder diese enthalten. Mischungen bzw. Abmischungen mit vorher genannten Komponenten sind ebenfalls möglich.

Eine bevorzugte Ausführungsform der Klebstoffschicht kann weiterhin wie folgt charakterisiert werden:
- Nadelpenetration, ermittelt nach DIN EN 1426, erzielt Werte im Bereich zwischen 60 bis 90, wobei die Einheit als 1/10 mm gewählt ist
- Erweichungspunkt, ermittelt nach EN 1427, liegt im Bereich zwischen 105 °C bis 120 °C
- Die Schälfestigkeiten zum Substrat, ermittelt nach DIN EN 12316-2, sollen generell im Bereich ≥ 25 N/5cm (oder auch angegeben als ≥ 5 N/cm) liegen.

Durch die unmittelbare Verbindung zwischen der Vliesschicht und der Deck- bzw. Dachbahn ist eine Haftvermittlerschicht nicht erforderlich, wodurch das Abdeckschichtsystem kostengünstiger im Vergleich zu Abdeckschichtsystemen mit Haftvermittlerschicht ist. Ungeachtet dessen ist eine feste Verbindung gegeben, da sich die Deckbahn mit der Vliesschicht verkrallt, indem die Deckbahn erweicht und somit Deckbahnmaterial in die Vliesschicht eindringen kann. Es ist eine rein mechanische Verbindung bzw. Verkrallung zwischen Deckbahn und Vliesschicht gegeben.

Daher zeichnet sich die Erfindung auch dadurch aus, dass die Deckschicht einen niedrigeren Schmelzpunkt als die Vliesschicht aufweist, so dass durch Wärmeeinwirkung die Deckbahn erweichen kann, um mit der Vliesschicht verbunden zu werden, ohne dass die Stabilität der Vliesschicht beeinträchtigt wird.

Insbesondere ist vorgesehen, dass die Vliesschicht, insbesondere die mechanisch verfestigte Vliesschicht, wie die Nadelvliesschicht, eine Grammatur G mit 50 g/m² ≤ G ≤ 300 g/m², insbesondere 150 g/m² ≤ G ≤ 220 g/m², aufweist.

Auch ist insbesondere vorgesehen, dass die Dicke Dv der Vliesschicht, insbesondere die der Nadelvliesschicht, bei Grammaturen G mit 150 g/m² ≤ G ≤ 250 g/m², insbesondere 150 g/m² ≤ G ≤ 220 g/m² zwischen 1,4 mm und 2,1 mm, insbesondere zwischen 1,6 mm und 1,9 mm, liegt.

Diese Werte gelten für die Vliesschicht als Rohware. Ist die Vliesschicht mit dem Klebstoff kaschiert, ist die Dicke - abhängig der Druckfestigkeit des Vlieses - geringer.

Die Vliesschicht, insbesondere die Nadelvliesschicht, zeichnet sich des Weiteren insbesondere dadurch aus, dass die Vliesschicht eine Zugfestigkeit [N/50 mm] in Längsrichtung von mehr als 300 und/oder in Querrichtung von mehr als 350 und/oder eine Dehnung ε in Längsrichtung mit ε > 45 % und/oder in Querrichtung mit ε > 45 % aufweist. Die Werte sind gemäß Norm EN 29073-3 bestimmt worden.

Insbesondere besteht die mechanisch verfestigte Vliesschicht aus oder enthält PET (Polyethylenterephthalat).

In einer Ausfiihrungsform ist insbesondere vorgesehen, dass der Anteil an PET mehr als 98 Gew.-% beträgt. Ferner kann Titandioxid (TiO₂) mit weniger als 0,5 Gew.-% und Antimontrioxid (Sb₂O₃) von weniger als 0,03 Gew.-% enthalten sein.

Weiterhin kann die mechanisch verfestigte Vliesschicht ebenfalls auf anderen bekannten Polyestertypen, Polyamiden oder Glas bestehen.

Die mechanisch verfestigte Vliesschicht bedarf grundsätzlich keiner besonderen Beschichtung oder Vorbehandlung, d. h. keine Fluorierung, Plastisol- oder Acrylat-Beschichtung. Bevorzugterweise wird ein Harz, vorwiegend Furonharz, benutzt, als Binder bzw. Verfestigungsmittel für die einzelnen Vliesfasern und zu deren Hydrophobierung.

Die mechanisch verfestigte Vliesschicht kann des Weiteren durch folgende Parameter gekennzeichnet sein:
- Schmelzpunkt zwischen 250 °C und/oder 250 °C, insbesondere zwischen 253 °C und/oder 260 °C und/oder
- Erweichungstemperatur zwischen 230 °C und/oder 240 °C und/oder
- Flammpunkt zwischen 390 °C und/oder 410 °C und/oder
- Zündtemperatur bei ca. 530 °C und/oder
- Dichte zwischen 1,36 g/cm³ und/oder 1,4 g/cm³ und/oder
- Wasserunlöslichkeit und/oder
- Glasübergangstemperatur zwischen 80 °C und/oder 100 °C und/oder
- kurzzeitige Temperaturstabilität zwischen 200 °C und/oder 230 °C und/oder
- Dauertemperaturbeständigkeit bis 90 °C.

Die Deck- oder Dachbahn besteht aus oder enthält zumindest ein Material aus der Gruppe PVC (Polyvinylchlorid), TPE (Thermoplastisches Elastomer), TPO (Thermoplastischer Elastomer auf Olefinbasis) oder FPO (Flexibles Polyolefin), TPV (Thermoplastisches Vulkanisat), EPDM (Ethylen-Propylen-Dien-Kautschuk), EVA (Ethylenvinylacetat), Fluorpolymere oder sonstige übliche Werkstoffe wie beispielsweise angegeben in der DIN SPEC 20000-201:2015-08.

Ferner kann ein Weichmacher enthalten sein, bei dem es sich um einen Polymer- oder niedermolekularen Weichmacher handeln kann. Sonstige Additive, die von Dachbahnen bekannt sind, können gleichfalls enthalten sein.

Insbesondere ist jedoch vorgesehen, dass die Deckbahn eingefärbt ist, insbesondere anthrazit, titangrau oder schwarz, d. h. in dunklen Farbtönen der Farbskala.

Überraschenderweise hat sich gezeigt, dass das erfindungsgemäße Abdeckschichtsystem eine dunkelgefärbte Deckbahn sein kann, wodurch ein Aufheizen des Schichtsystems erfolgt, ohne dass eine Migration insbesondere der Öle aus der bituminösen Klebstoffschicht auftritt. Die Barrierewirkung wird durch die Vliesschicht erzielt, ohne dass es einer gesonderten Sperrfolie bedarf.

Die Deckbahn kann mehrschichtig aufgebaut sein und insbesondere eine Verstärkung oder Einlage sowie Kombinationen daraus aufweisen. Dabei ist insbesondere vorgesehen, dass die Verstärkung zumindest aus der Gruppe Gewebe, Gelege, Vlies, Gitter, Maschenware oder eine beliebige Kombination von diesen enthält.

Verstärkung und/oder Einlage werden auch als Verstärkungsschicht bezeichnet.

Bei der Verstärkungsschicht handelt es sich insbesondere um eine Verstärkung oder Einlage aus der Gruppe Gewebe, Gelege, Vlies, Gitter, Maschenware oder eine beliebige Kombination von diesen. Dabei sollte die Verstärkungsschicht mit einem Binder imprägniert sein, insbesondere einem Binder aus der Gruppe Styrol-Butadien, Acrylat, PVC, EVA oder eine beliebige Kombination dieser. Dabei kann je nach Verstärkungstyp ein Binder zwingend gefordert sein. Dies gilt z. B. für Gelege. Für Gewebe kann z. B. zusätzlich ein Binder, z.B. PVC-Plastisol, zum Einsatz gelangen.

Die Verstärkung bzw. Einlage besteht aus Glasfasern und/oder Synthesefasern oder enthält diese. Dabei können die Synthesefasern diejenigen sein, die auch für die Vliesschicht Verwendung finden. Insbesondere ist vorgesehen, dass es sich bei den Synthesefasern um Bikomponenten basierend auf Polyester und Polypropylen handelt.

Die Verstärkungseinlage sollte eine Grammatur zwischen 25 g/m² und 75 g/m², vorzugsweise zwischen 45 g/m² und 55 g/m², aufweisen.

Als Maschenware werden üblicherweise textile Flächengebilde oder textile Raumgebilde bezeichnet, bei denen eine mittels Faden gebildete Schleife in eine andere Schleife hineingeschlungen ist. Die auf diese Weise entstehenden Maschen können unter Verwendung eines Fadens oder mehrerer Fäden gebildet werden.

Damit unterscheiden sich Maschenwaren von Geweben, bei der die Fläche durch Verkreuzen von zwei Fadensystemen hergestellt wird, und auch von Vliesen, bei denen ein loser Faserflor, beispielsweise durch Wärme, verfestigt wird. Maschenware zeichnet sich im Vergleich zum Gewebe durch eine höhere Dehnbarkeit, Elastizität und infolgedessen geringere Knitterbildung aus.

Bei den Maschenwaren unterscheidet man Strick- oder Wirkware - eine weitere Bezeichnung kann ebenfalls Gestricke oder Gewirke sein. Die Herstellung der Maschenwaren erfolgt dabei in Einfadentechnik (Strickwaren und Kulierwirkwaren) oder in Kettfadentechnik (Mehrfadenware als Kettenwirk- oder Kettenstrickware).

Die Verstärkungsschicht besteht oder enthält Maschenware, wobei diese wiederum eine Kombination von Gewirken und Gestricken enthalten kann.

Die Verstärkungsschicht enthält bevorzugterweise Fasern, die aus Glas-, Mineral-, Polyester-, Polyamid-, Polyethylen-, Polypropylenfasern oder aus Mischungen von diesen bestehen.

Als Materialien für die Fasern kommen solche in Frage, die auf Glas- und/oder Synthesefasern basieren.

Ein Verfahren zur Herstellung eines Abdeckschichtsystems, insbesondere zuvor beschriebener Art, zeichnet sich durch die Verfahrensschritte aus
- Bereitstellen einer Rolle von Material einer ersten Schicht der Deckbahn,
- Bereitstellen einer Rolle von Material der Vliesschicht,
- Abziehen von dem Deckbahnmaterial und dem Vliesschichtmaterial von den Rollen,
- Führen sowohl des abgezogenen Deckbahnmaterials als auch des Vliesschichtmaterials durch einen von zwei sich drehenden Walzen begrenzten ersten Spalt bei gleichzeitigem Extrudieren von Material einer weiteren Schicht der Deckbahn zwischen die in den ersten Spalt eintretenden Materialien der ersten Schicht und der Vliesschicht.

Dabei ist insbesondere vorgesehen, dass vor Zuführen der ersten Schicht des Deckbahnmaterials zu dem Spalt von einer Rolle ein eine Verstärkungsschicht bildendes Verstärkungsmaterial abgezogen und durch ein von zwei zweiten Walzen begrenzten zweiten Spalt geführt wird bei gleichzeitigem Extrudieren von dem Material der ersten Schicht auf das durch den zweiten Spalt zu ziehende Verstärkungsmaterial, wobei insbesondere das Extrudieren in Richtung des zweiten Spaltes erfolgt. Die so gebildete Einheit aus der ersten Schicht und der Verstärkungsschicht wird sodann dem ersten Spalt zugeführt. Man spricht auch von der Herstellung einer 1. Passage.

Bevorzugterweise sieht die Erfindung vor, dass nach Verbinden des Vliesschichtmaterials mit dem Deckbahnmaterial auf das Vliesmaterial insbesondere flächig die Klebeschicht aufgetragen wird. Ein Auftragen des bituminösen Klebstoffs kann auch streifenförmig erfolgen. Insoweit ist unabhängig von dem Herstellungsverfahren der Begriff Klebstoffschicht derart zu verstehen, dass eine flächig aufgetragene Schicht oder streifenförmig aufgetragener Klebstoff unter Klebstoffschicht zu subsumieren ist.

Des Weiteren kann der Klebstoffauftrag nicht nur vollflächig oder streifenweise, sondern auch in anderen Strukturen oder Formen, wie z.B. Rauten, Rechtecken, versetzte Streifen, usw. aufgetragen werden.

Des Weiteren kann der Klebstoffauftrag auch punktweise aufgebracht werden.

Wird der Klebstoff in anderen Formen oder Strukturen über die Breite des Abdecksystems bzw. des Vlieses gleichmäßig aufgetragen, kann auf andere Auftragssysteme, wie Walzenübertrag, und andere dem Fachmann geläufige Verfahren für den Klebstoffauftrag zurückgegriffen werden.

Bei streifenweisem oder punktförmigem Auftrag werden neben dem Entweichen der Luft beim Applizieren der Dachbahn und luftblasenfreiem Auftrag ebenfalls Kosten durch geringere Klebstoffmengen erzeugt.

Des Weiteren sollte auf die freie Oberfläche der Klebeschicht eine Schutzfolie aufgebracht werden, die eine Silikonisierung aufweist, die auf die Klebstoffmasse abgestimmt ist, um einen rückstandslosen Abzug zu ermöglichen. Dies bedeutet, dass das Silikonisierungssystem fest auf der Schutzfolie verankert und durchgängig vernetzt ist, so dass ein Silikonübertrag auf die Klebstoffmasse nicht möglich ist.

Bei der Schutzfolie kann es sich im Allgemeinen um Mehrschichtfolien handeln. Hierbei kommen insbesondere reine Einschicht-Polymerfolien, Kombination von Polymerschichten als auch von dünnen Metallschichtfolien zum Einsatz. Als Beispiel kann es sich um eine polyolefinische Schutzfolie handeln, z.B. basierend auf Polypropylen (PP), Polyethylen (PE) oder anderen Polyolefinen.

Wichtig ist hierbei jeweils die außenseitige bzw. dem Klebstoff zugewandte Seite der Schutzfolie bzw. -liners bzw. deren aufgebrachte Silikonisierung, wobei die Silikonisierung auf den Klebstoff abgestimmt ist. Weiterhin kann der Liner bzw. die Schutzfolie auch (teilweise) geschäumt ausgebildet werden. Die Schutzfolie kann glatt als auch gekreppt zur Verfügung gestellt werden. Dabei ist die gekreppte Variante zu bevorzugen, um Lufteinschüsse beim Applizieren des Schichtsystems zu verhindern. Die Krepp- oder Wellenform der Schutzfolie wird dabei auf die Klebstoffschicht übertragen. Gekreppt bedeutet dabei im Querschnitt eine Wellenform in einer senkrecht zur von dem Abdeckschichtsystem verlaufenden Ebene, so dass sich Erhöhungen und Vertiefungen ergeben. Somit kann beim Auftragen des Abdeckschichtsystems auf eine Unterfläche Luft durch die so gebildeten Kanäle seitlich austreten. Es erfolgt zunächst ein Anhaften auf dem Untergrund über die Erhebungen. Durch Wärmezugabe wird die Klebstoffmasse fließfähig und eine vollflächige Verklebung ist sichergestellt.

In weiteren Ausführungsformen kann die Schutzfolie bzw. -liner auch beidseitig silikonisiert sein. Hier muss weiterhin auf die Verträglichkeit der Silikonisierung zur Oberfläche der Deckbahn geachtet werden, da im Rollverfahren, dies bedeutet da die Ware als Rollenware verpackt werden kann, die Deckbahn im direkten Kontakt mit der Schutzfolie- bzw. -liner steht. Hierbei soll ein möglicher Silikonübertrag möglichst verhindert werden, um etwaige spätere Folgen in der Applizierung der Dachbahn zu verhindern, wie z.B. Schweißproblematiken.

In weiteren Ausführungsformen kann die Schutzfolie bzw. -liner auch eine glatte Folie sein, welche entsprechend des Herstellers Anforderungen an eine Sperrfolie gegen die Migration von flüchtigen Bestandteilen des Klebstoffs erfüllt. Hierdurch ergibt sich der Vorteil, dass bei einer Lagerung als Rollenware auch über die Zeit keine Übertragung der flüchtigen Bestandteile auf die Oberfläche der auf der Schutzfolie anliegenden Deckschicht erfolgt. Anderenfalls ergäbe sich ein negativer Einfluss auf die Alterung bzw. die Lebenszeit der Dachbahn und der zugehörigen Funktion als Dichtschicht.

Die Dickenverteilung des Abdeckschichtsystems setzt sich zusammen aus der Dicke der Deckbahn, dies bedeutet der effektiven bzw. wirksamen Dicke, der Vliesschichtdicke, dies bedeutet durch den Produktionsprozess minimierten bzw. gepressten Dicke, der Klebstoffdicke sowie der Schutzfolie bzw. -linerdicke.

Die Gesamtdicke des Abdichtschichtsystems einschließlich Schutzfolie oder -liner beläuft sich zwischen 2,6 mm und 4,2 mm.

Die effektive bzw. wirksame Dicke der Deckbahn liegt bevorzugterweise im Bereich zwischen 1,2 mm und 2,5 mm.

In einer bevorzugten Form des Abdecksystem bildet die Deckbahn eine effektive bzw. wirksame Dicke von 1,2 bis 1,8 mm aus, das Abdecksystem einschließlich Schutzfolie oder -liner eine Gesamtdicke von 2,7 mm bis 3,2 mm und das Flächengewicht sollte zwischen 2,5 kg/m² bis 2,9 kg/m² liegen.

Die Dicken, Gesamtdicken, effektiven bzw. wirksamen Dicken sowie Flächengewichte werden gemäß DIN EN 1849-2 ermittelt und ausgewertet.

Gelangt ein Glasvlies als Einlage zum Einsatz, so sollte die Grammatur zwischen 10 g/m² und 500 g/m², insbesondere zwischen 25 g/m² und 500 g/m², besonders bevorzugt zwischen 25 g/m² und 75 g/m², liegen.

Gelangt ein Polyestervlies als rückseitige Vliesschicht bzw. auch Vlieskaschierung genannt, zum Einsatz, so sollte die Grammatur zwischen 10 g/m² und 500 g/m², insbesondere zwischen 25 g/m² und 500 g/m², besonders bevorzugt zwischen 180 g/m² und 220 g/m², liegen.

Weitere Einzelheiten, Vorteile und Merkmale ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden bevorzugten Ausführungsbeispielen.

Es zeigen:
- Fig. 1: einen Ausschnitt eines Abdeckschichtsystems in Prinzipdarstellung,
- Fig. 2: ein Teilverfahrensschritt zur Herstellung eines Mehrschichtabdecksystems nach der ersten Ausführungsform,
- Fig. 3: ein zweiter Verfahrensschritt zur Herstellung des Abdeckschichtsystems nach einer ersten Ausführungsform,
- Fig. 4: ein erster Herstellungsschritt zur Herstellung eines Abdeckschichtsystems nach einer zweiten Ausführungsform,
- Fig. 5: ein zweiter Verfahrensschritt zur Herstellung des Abdeckschichtsystems nach der zweiten Ausführungsform,
- Fig. 6: ein dritter Verfahrensschritt zur Herstellung des Abdeckschichtsystems nach der zweiten Ausführungsform,
- Fig. 7, 8: eine dritte Ausführungsform eines Herstellungsverfahrens und
- Fig. 9: eine vierte Ausfiihrungsform eines Herstellungsverfahrens.

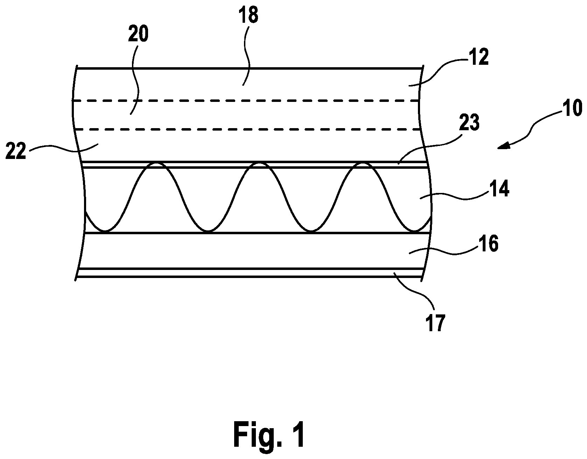

In Fig. 1 ist in Prinzipdarstellung ein Ausschnitt eines Abdeckschichtsystems 10 dargestellt, das aus einer nachstehend als Dachbahn bezeichneten Abdeckbahn 12, einer Vliesschicht 14 sowie einer Klebeschicht 16 besteht, die ihrerseits von einer Schutzfolie 17 abgedeckt sein kann. Die Dachbahn 12 selbst ist bevorzugterweise mehrschichtig ausgebildet, und zwar im Ausführungsbeispiel besteht diese aus einer außenliegenden ersten Schicht 18, einer Verstärkungsschicht 20 als innere Schicht sowie einer diese abdeckenden vliesseitig verlaufenden zweiten Schicht 22, die mechanisch mit der Vliesschicht 14 verbunden ist.

Die Schichten 18, 22 bestehen aus Kunststoff.

Bei der Vliesschicht 14 handelt es sich um eine solche aus der Gruppe mechanisch verfestigte Vliesschicht aus Synthesefasern, Glasvliesschicht oder Kombination dieser. Dabei kann die Vliesschicht ein- oder mehrschichtig ausgebildet sein, insbesondere auch als Spaltvlies. Nachstehend wird von einem Nadelvlies ausgegangen, ohne dass hierdurch die Erfindung eingeschränkt wird. Nadelvlies bedeutet eine mechanisch verfestigte Vliesschicht, die auch eine kalandrierte oder wasserstrahlverfestigte Vliesschicht einschließt.

Zu den nachstehend angegebenen Materialien ist anzumerken, dass diese bevorzugt, jedoch nicht einschränkend zu verstehen sind.

Die Dachbahn 12, hier die Schichten 18, 22, basieren auf oder enthalten zumindest ein Material aus der Gruppe PVC (Polyvinylchlorid), TPE (Thermoplastisches Elastomer), TPO (Thermoplastischer Elastomer auf Olefinbasis) oder FPO (Flexibles Polyolefin), TPV (Thermoplastisches Vulkanisat), EPDM (Ethylen-Propylen-Dien-Kautschuk), EVA (Ethylenvinylacetat), Fluorpolymere oder sonstige übliche Werkstoffe wie beispielsweise angegeben in DIN SPEC 20000-201:2015-08.

Als bevorzugtes Material für die Schichten 18, 22 ist PVC, insbesondere Weich-PVC, zu nennen.

Die Einlage, also die Verstärkungsschicht 20, kann ein Glasvlies sein, das mit den angrenzenden Schichten 18, 22 ohne zusätzliche Haftvermittlungsschicht verbunden ist, indem Material der Schichten 18, 22 in die Vliesschicht 20 eindringt und somit ein Verkrallen von Material in der Glasvliesschicht 20 erfolgt. Es erfolgt somit eine rein mechanische Verbindung.

Ferner können die Dachbahn 12, hier die Schichten 18, 22, einen Weichmacher, bei dem es sich um einen Polymerweichmacher und/oder um einen niedermolekularen Weichmacher handeln kann, enthalten.

Ist das Basismaterial der Dachbahn 12 bzw. deren Schichten 18, 22 Weich-PVC (PVC-P), so ist ein Weichmacher zwingend. Bei anderen der zuvor aufgelisteten Kunststoffen sind Weichmacher bevorzugt, jedoch nicht zwingend.

Die Zusammensetzungen der Dach- oder Dichtungsbahn 12, 18, 22 können darüber hinaus weitere Zusätze wie Füllstoffe, Pigmente, Farbstoffe, UV-Stabilisatoren, Thermostabilisatoren, Fungizide, Biozide, Verarbeitungshilfen, Schlagzähmodifizierer, Acrylate und zusätzliche Weichmacher enthalten. Diese zusätzlichen Weichmacher können bevorzugt niedermolekulare, monomere Weichmacher sein, wie beispielsweise Phthalsäureester (Phthalate). Als Weichmacher können außerdem die üblichen aus dem Stand der Technik bekannten mit PVC verträglichen Weichmacher eingesetzt werden. Typische Weichmacher sind beispielsweise Derivate der Sylvinsäure oder Essigsäurederivate, wie beispielsweise Cumylphenylacetat, Derivate der Adipinsäure, wie Benzyloctyladipat, Dibutyladipat, Diisobutyladipat, Di-(2-ethylhexyl)adipat, Diisononyladipat, Derivate der Azelainsäure, Benzoesäurederivate, Polyphenylderivate, Zitronensäurederivate, epoxidierte Fettderivate sowie Glycolderivate. Weiterhin können auch biobasierte Weichmacher eingesetzt werden, d. h. Weichmacher, die (zumindest teilweise) nachwachsende Rohstoffe enthalten, wie diese beispielsweise in der EP 3 156 447 A1 beschrieben sind.

Des Weiteren können auch sogenannte polymere Weichmacher bzw. polyesterbasierende Weichmacher und/oder Thermoplastische Polyurethane (TPU) eingesetzt werden. Die Weichmacher basieren bevorzugt auf Adipin- oder Sebacinsäure. Hierbei wird ein mittleres Molekulargewicht von 3.000 bis 12.000 besonders bevorzugt.

Sofern Weichmacher enthalten sind, enthält die Zusammensetzung vorzugsweise weniger als 45 Gew.-% an Weichmachern, besonders bevorzugt weniger als 37 Gew.-% und minimal 15 Gew.-%, insbesondere 30 Gew.-% bis 36 Gew.-%.

Die Weichmacherkomponente kann nicht nur aus einer der oben genannten Komponenten, sondern auch aus Mischungen der oben genannten Komponenten bestehen.

Nach einer Ausführungsform kann der Weichmacher nur aus sogenannten polymeren Weichmachern bzw. polyesterbasierenden Weichmachern und/oder Thermoplastischen Polyurethanen (TPU) bestehen. Diese basieren bevorzugt auf Adipin- oder Sebacinsäure. Hierbei wird ein mittleres Molekulargewicht von 3.000 bis 12.000 besonders bevorzugt. Der Vorteil in deren alleinige Verwendung liegt in der Verträglichkeit zu Bitumen bzw. Bitumenbestandteilen. Deckbahnen, welche keine monomeren Bestandteile als weichmachende Komponenten besitzen, sind generell unempfindlicher in Kontakt mit bituminösen Massen bzw. Materialien. Hier ist die Wechselwirkung und die damit einhergehende Eigenschaftsänderung, welche im schlimmsten Falle in der Verhärtung und Versprödung der Dachbahn endet, gestoppt und/oder verlangsamt.

Zur Erhöhung der Thermostabilität der Bahnen können zusätzlich aus dem Stand der Technik bekannte Wärmestabilisatoren, wie z. B. Ba/Zn-Stabilisatoren, vorzugsweise Ca/Zn-Stabilisatoren, enthalten sein. Daneben können auch zusätzlich noch UV-Stabilisatoren enthalten sein, wie beispielsweise Oxalanilide, Amide, Titandioxid, Ruß, insbesondere Tinuvin^{®} und/oder Chimasorb^{®} und/oder insbesondere NOR-HALS Stabilisatoren. Üblicherweise sind die Stabilisatoren jeweils in Mengen von 0,01 Gew.-% bis 10 Gew.-%, vorzugsweise 0,1 Gew.-% bis 5 Gew.-%, enthalten. Üblicherweise übersteigt die Gesamtmenge an Stabilisatoren nicht 20 Gew.-% der Mischung.

Bei Stabilisatoren spricht man auch in einer bevorzugten Form von One-Pack Stabilisatoren. Hier werden bereits oben genannte Komponenten kombiniert, um eine bessere Einarbeitbarkeit sowie Dispergierung und Verteilung in der Mischung zu garantieren. Beispielsweise können Ca/Zn One-Pack Stabilisatoren neben den der Hauptkomponente Ca/Zn auch Hydrotalcit oder Zeolithe (wobei Hydrotalcit aufgrund der geringeren Wasseraufnahme Zeolithen vorzuziehen ist), Gleitmittel, Antioxidantien und/oder Fließhilfen beinhalten.

Tinuvin^{®}, vorzugweise Tinuvin XT 833, wirkt nicht nur als UV-Stabilisator, sondern auch als Säurefänger, wodurch die Hydrolyse verbessert wird. Der Stabilisator Tinuvin XT 833 fängt zusätzlich die Salzsäure und verbessert das Alterungsverhalten so, wie die Hydrolysestabilität.

Tinuvin XT 833 ist gelistet gemäß Sicherheitsdatenblatt als Produkt mit einem Anteil von 40 Gew.-% bis 60 Gew.-% der CAS Nr.: 25973-55-1, wodurch die chemische Bezeichnung wie folgt hinterlegt ist: 2-(2H-Benzotriazol-2-yl)-4,6-di-tert-pentylphenol. Dementsprechend können auch Substanzen, welche der Zusammensetzung des Tinuvin XT 833 entsprechen, jedoch unter anderem Produktnamen geführt werden, ebenfalls verwendet werden.

Als Füllstoffe können die Bahnen die üblichen aus dem Stand der Technik bekannten Füllstoffe enthalten, wie beispielsweise Kreide, Talkum, Kieselsäuren oder Kaolin als Füllstoff. Die Menge an Füllstoffen beträgt 0 Gew.-% bis 15 Gew.-%, bevorzugt 1 Gew.-% bis 10 Gew.-%.

Kreide wird bevorzugt als gecoatete Kreide eingesetzt. Kaolin verbessert sowohl die Abriebs- als auch die Medienbeständigkeit.

Kaolin besitzt ebenfalls einen sauren Charakter, was sich z.B. mittels pH-Wert beschreiben lässt: hier liegt im Durchschnitt der pH-Wert zwischen 4,5 und 6,5. Vergleichsweise besitzt Essigsäure einen pH-Wert von 4,75. Dementsprechend wird in einer Anwendung der Einsatz von Kreide, besonders gecoateter Kreide, bevorzugt, um den Säureanteil in der Rezeptur niedrig zu halten. Weiterhin können auch neutrale Kaolintypen eingesetzt werden, dies bedeutet Typen, welche einen pH-Wert von 6 bis 8 aufweisen.

Generell gilt für alle Füllstoffe, dass der Anteil an Eisen(oxid) aufgrund katalytischer Alterungserscheinungen möglichst gering zu halten ist.

Daneben können noch weitere übliche Inhaltsstoffe enthalten sein, wie beispielsweise Gleitmittel, Verarbeitungshilfsmittel, Gelierhilfen, UV-Wandler, UV-Stabilisatoren oder Biozide, wie beispielsweise Thiazolinderivate, Tributylzinn, Chlorisothiazolin, besonders bevorzugt sind Isothiazolinderivate.

Flammschutzmittel, Stabilisatoren, Pigmente, Co-Stabilisatoren, UV-Stabilisatoren, Thermo-Stabilisatoren oder andere für Dachbahnen geeignete oder sonstige für Dachbahnen benutzte Additive können zum Einsatz gelangen.

Insbesondere ist der Gewichtsanteil in jeder Schicht 18, 22 in Prozent: PVC mind. 40 %, Weichmacher max. 45 %, Additive max. 20 %.

Bei der Verstärkungsschicht 20 handelt es sich insbesondere um eine Verstärkung oder Einlage aus der Gruppe Gewebe, Gelege, Vlies, Gitter, Maschenware oder eine beliebige Kombination von diesen. Dabei sollte die Verstärkungsschicht 20 mit einem Binder imprägniert sein, insbesondere einem Binder aus der Gruppe Styrol-Butadien, Acrylat, PVC, EVA oder eine beliebige Kombination dieser. Dabei kann je nach Verstärkungstyp ein Binder zwingend gefordert sein. Dies gilt z. B. für Gelege. Für Gewebe kann z. B. zusätzlich ein Binder, z.B. PVC-Plastisol, zum Einsatz gelangen.

Als Maschenware werden üblicherweise textile Flächengebilde oder textile Raumgebilde bezeichnet, bei denen eine mittels Faden gebildete Schleife in eine andere Schleife hineingeschlungen ist. Die auf diese Weise entstehenden Maschen können unter Verwendung eines Fadens oder mehrerer Fäden gebildet werden.

Damit unterscheiden sich Maschenwaren von Geweben, bei der die Fläche durch Verkreuzen von zwei Fadensystemen hergestellt wird, und auch von Vliesen, bei denen ein loser Faserflor beispielsweise durch Wärme verfestigt wird. Maschenware zeichnet sich im Vergleich zum Gewebe durch eine höhere Dehnbarkeit, Elastizität und infolgedessen geringere Knitterbildung aus.

Bei den Maschenwaren unterscheidet man Strick- oder Wirkware - eine weitere Bezeichnung kann ebenfalls Gestricke oder Gewirke sein. Die Herstellung der Maschenwaren erfolgt dabei in Einfadentechnik (Strickwaren und Kulierwirkwaren) oder in Kettfadentechnik (Mehrfadenware als Kettenwirk- oder Kettenstrickware).

Die Verstärkungsschicht 20 besteht oder enthält Maschenware, wobei diese wiederum eine Kombination von Gewirken und Gestricken enthalten kann.

Die Verstärkungsschicht 20 enthält bevorzugterweise Fasern, die aus Glas-, Mineral-, Polyester-, Polyamid-, Polyethylen-, Polypropylenfasern oder aus Mischungen von diesen bestehen.

Die mechanisch verfestigte Vliesschicht 14, insbesondere in Form einer Nadelvliesschicht 14, kann auf Polyester, insbesondere PET (Polyethylenterephthalat), basieren und zeichnet sich dadurch aus, dass sie eine Grammatur G mit 150 g/m² < G < 250 g/m², insbesondere 180 g/m² < G < 220 g/m², und/oder eine Dicke D_{V} mit 1,4 mm < D_{V} < 2,1 mm, insbesondere 1,6 mm < D_{V} < 1,9 mm, aufweist.

Die Dicke D_{V} ist die Dicke der Vliesschicht 14 in Form von Rohware. Ist die Vliesschicht 14 mit der Klebeschicht 16 verbunden, also mit dieser kaschiert, verringert sich die Dicke in Abhängigkeit von ihrer Druckfestigkeit.

Anzumerken ist in diesem Zusammenhang, dass unter Klebeschicht 16 auch streifenförmig aufgebrachtes bituminöses Klebermaterial zu verstehen ist. Insoweit umfasst der Begriff Klebstoffschicht sowohl eine Schicht als auch Streifen.

Insbesondere ist vorgesehen, dass die Vliesschicht 14 eine Zugfestigkeit [N/50 mm] in Längsrichtung von mehr als 300 und/oder in Querrichtung von mehr als 350 und/oder eine Dehnung ε in Längsrichtung mit ε > 45 % und/oder in Querrichtung mit ε > 45 % aufweist (Werte gemäß Norm EN 29073-3 bestimmt).

Um eine feste Verbindung zwischen der Dachbahn 12 und der Vliesschicht 14 herzustellen, ohne dass eine Haftvermittlerschicht notwendig ist, erfolgt eine mechanische Verbindung dadurch, dass sich das Dachbahnmaterial mit dem Nadelvlies verkrallt. Hierzu erfolgt ein Erweichen bzw. Erhitzen der Dachbahn 12, um sodann geschmolzenes Dachbahnmaterial in die Vliesschicht 14 eindringen zu lassen. Damit die Formstabilität der Vliesschicht 14 durch den diesbezüglichen Prozess nicht beeinträchtigt wird, ist die Wärmefestigkeit der Vliesschicht 14 größer als die der Dachbahn 12 bzw. der inneren Schicht 22.

Die auf die Vliesschicht 14 aufgetragene bituminöse Schicht 16 besteht aus oder enthält Bitumen, vorzugsweise Bitumen 500/650 (gemäß EN 12591), verzweigte und/oder unverzweigte (Block-)Copolymere basierend auf Styrol und Butadien und/oder Isopren und gegebenenfalls Kohlenwasserstoffharze und/oder Fluxöl.

Ferner zeichnet sich die Klebeschicht 16 insbesondere dadurch aus, dass diese eine Grammatur G_{B} mit 600 g/m² < G_{B} < 800 g/m², insbesondere 650 g/m² < G_{B} < 750 g/m², und/oder eine Dicke D_{B} mit 0,60 mm < D_{B} < 0,75 mm, insbesondere 0,65 mm < D_{B} < 0,70 mm, aufweist.

Außenseitig kann die bituminöse Schicht 16 mit einer Schutzfolie 17 abgedeckt sein, um vor Gebrauch eine einfache Handhabbarkeit sicherzustellen, ohne dass die Klebeschicht 16 zu Beeinträchtigungen führt.

Die gesamte Dicke des Abdeckschichtsystems 10 beläuft sich im Bereich zwischen 2,6 mm und 4,2 mm, ohne dass hierdurch die erfindungsgemäße Lehre eingeschränkt werden soll.

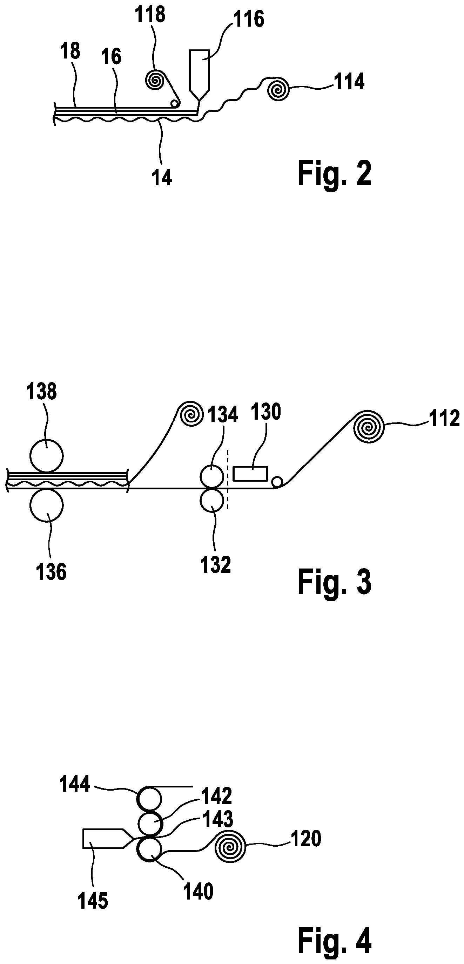

Um das Abdeckschichtsystem 10 herzustellen, können bevorzugterweise Verfahren zum Einsatz gelangen, die anhand der Fig. 2 bis 9 erläutert werden sollen.

Gemäß dem Ausführungsbeispiel der Fig. 2 und 3 wird das Abdeckschichtsystem wie folgt hergestellt. Von einer Rolle 114, auf der eine Vliesbahn aufgerollt ist, wird Material abgezogen und unter einem Auftragssystem 116 hindurch geführt, über das bituminöser Klebstoff flächig aufgetragen wird. Auf die so gebildete Klebeschicht 16 wird sodann von einer Rolle 118 Schutzfolienmaterial abgezogen und auf die Klebeschicht 16 aufgebracht.

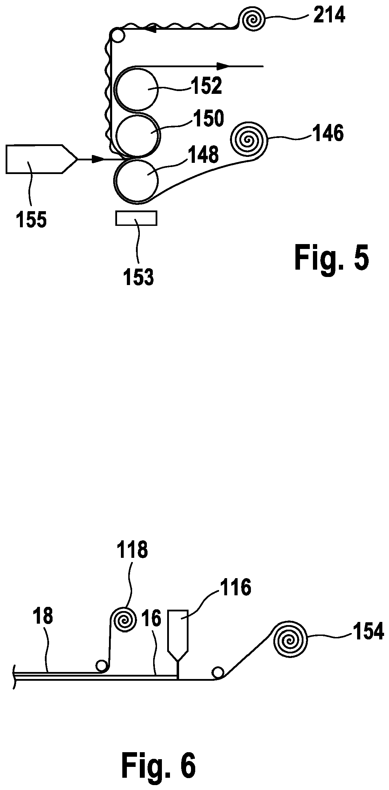

Ganz allgemein kann das Auftragen des Klebstoffs in direktem oder indirektem Beschichtungsverfahren durchgeführt werden. Dies bedeutet, dass die Klebstoffmasse direkt auf die Nadelvliesschicht 14 - wie anhand der Fig. 2 bzw. 6 verdeutlicht - aufgetragen werden oder - beim indirekten Verfahren - zuerst die Klebstoffmasse auf die Schutzfolie aufgetragen werden, also das sogenannte Transfer-Film-Verfahren zur Anwendung gelangen. Die Einheit Klebstoffschicht-Schutzfolie wird als Rollenmaterial sodann zur Verfügung gestellt, um das Schichtsystem Klebstoff-Schutzfolie mittels Druck und Temperatur auf die Vliesschicht aufzubringen. Das Erwärmen kann z. B. mittels IR-Strahler und/oder Kontaktverfahren mittels Wärmeübertrag aus einem Rollen-/Walzensystem erfolgen.

Um die so hergestellte selbstklebende Vliesschicht, wie Nadelvliesbahn, bestehend aus der Vliesschicht 14 und der Klebeschicht 16, die auch aus Klebestreifen bestehen kann, mit einer ein- oder mehrschichtigen Deckbahn - nachstehend als Dachbahn 12 bezeichnet - zu verbinden, wird entsprechend der Fig. 3 von einer Rolle 112 Dachbahnmaterial abgezogen und erwärmt. Hierzu können z. B. ein oder mehrere Infrarotstrahler 130 oder Walzen 132, 134 benutzt werden, die aufgeheizt sind und zwischen denen das Dachbahnmaterial geführt wird. Das so erweichte Dachbahnmaterial wird sodann mit der selbstklebenden Vliesbahn verbunden, wobei Material der Dachbahn in das Vlies eindringt und mit diesem verkrallt. Hierzu ist insbesondere ein weiteres Walzenpaar 136, 138 vorgesehen, um den erforderlichen Druck aufzubringen, damit das teilweise Durchdringen (Bereich 23 in Fig. 1) und somit die mechanische Verbindung hergestellt werden kann.

Die Deckbahn wird vorzugsweise nur auf der Seite erwärmt, auf welche das Vlies appliziert werden soll. Hierdurch wird die Wärmestandfestigkeit bzw. der Abbau der Thermostabilisatoren, enthalten in der Deckbahn, verhindert.

Nach dem Herstellungsverfahren gemäß der Fig. 4 bis 6 gelangt folgendes Prozedere zur Anwendung:
So wird gemäß Fig. 4 zunächst von einer Rolle 120 eine Verstärkungslage abgezogen, die in der Dachbahn 12 die Verstärkungsschicht (Schicht 20) bildet und somit von den Schichten 18 und 22 umgeben wird. Hierzu wird das von der Rolle 120 abgezogene bahnförmige Verstärkungsmaterial durch einen von Walzen 140, 142 begrenzten Spalt 143 geführt. Gleichzeitig wird in Richtung des Spaltes Material der ersten Schicht 18 extrudiert (Extruder 145) und somit auf das Verstärkungsmaterial aufgetragen.

Das so hergestellte Schichtsystem wird sodann - vorzugsweise nachdem es zuvor aufgerollt worden ist (Rolle 146 in Fig. 5) - durch weitere Walzen 148, 150, 152 geführt, wobei bevorzugterweise ein Erwärmen des Bahnmaterials z.B. mittels eines Infrarotstrahlers 153 erfolgt.

Dem von den Walzen 148 und 150 begrenzten Spalt wird ein die Vliesschicht 14 bildendes bahnförmiges Vliesbahnmaterial zugeführt, das von einer Rolle 214 abgezogen wird. In Richtung des Spaltes, der von den Walzen 148, 150 begrenzt ist und dem zum einen das Vliesschichtmaterial und zum anderen das aus dem Verstärkungsmaterial und dem Material der ersten Schicht 18 bildende bahnförmige Material zugeführt wird, wird ein die zweite Schicht 22 der Deckbahn bzw. Dachbahn 12 bildendes Kunststoffmaterial extrudiert (Extruder 155).

Hierdurch erfolgt gleichzeitig die gewünschte Verbindung zwischen dem Vliesmaterial und der im fertigen Abdeckschichtsystem inneren Schicht 22 der Dachbahn 12, ohne dass eine besondere Haftvermittlerschicht erforderlich ist.

Das aus der Dachbahn 12 mit den Schichten 18 und 22 und der zwischen diesen verlaufenden Verstärkungsschicht, wie Kombinationsträgereinlage 20, bestehende Dachbahnmaterial und das mit diesem verbundene Vliesmaterial werden sodann aufgewickelt, um sodann von einer Rolle 154 abgezogen und nadelvliesseitig mit einer Klebstoffschicht versehen zu werden (Auftragseinrichtung 116), wie dies der Fig. 6 prinzipiell zu entnehmen ist.

Nach Auftragen der Klebeschicht 16 wird eine Schutzfolie 18 aufgebracht, wie dies im Zusammenhang mit der Fig. 2 erläutert worden ist.

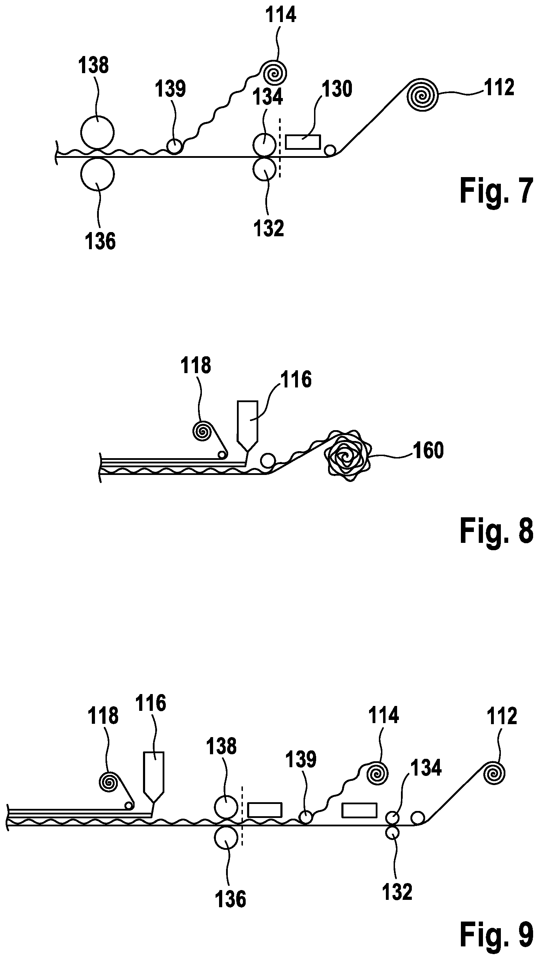

Den Fig. 7 und 8 ist eine Variante zu dem Herstellungsverfahren der Fig. 2 und 3 zu entnehmen, wobei für gleiche Elemente bzw. Einrichtungen gleiche Bezugszeichen verwendet werden.

So wird gemäß Fig. 7 von der Rolle 112 Deckbahnmaterial abgezogen, um sodann das mittels der Infrarotstrahler 130 und/oder Walzen 132, 134 erwärmte Dachbahnmaterial mechanisch mit von einer Rolle 114 abgezogenem Vliesmaterial zu verbinden. Zum Kaschieren bzw. Laminieren wird das Dachbahnmaterial und das Vliesmaterial zwischen Walzen 136, 138 geführt. Zuvor wird das Vliesmaterial mittels einer Umlenkrolle 139 in Richtung der Walzen 136, 138 bzw. des von diesen begrenzten Spalts gelenkt.

Die so hergestellte vlieskaschierte Bahn wird aufgerollt (Rolle 160), um sodann nach Abziehen der Bahn auf diese entsprechend der Fig. 2 das Klebeschichtmaterial aufzutragen und die so gebildete Klebeschicht 16 mit einer Schutzfolie (Release Liner), die von der Rolle 118 abgezogen wird, abzudecken (Fig. 8). Diese weist bevorzugterweise eine Krepp- oder Wellenform auf. Krepp bedeutet dabei im Querschnitt eine Wellenform in einer senkrecht zur Klebeschicht und in Längsrichtung der Bahn (Transportierung) verlaufenden Ebene, so dass sich Erhöhungen und Vertiefungen ergeben. Somit kann beim Auftragen der Schutzfolie auf die Klebeschicht Luft seitlich austreten, da sich durch die Wellenform Kanäle bilden. Es erfolgt zunächst ein Anhaften auf dem Untergrund über die Erhebungen. Durch Wärmezugabe wird die Klebstoffmasse fließfähig und eine vollflächige Verklebung erfolgt. Eine entsprechende Schutzfolie oder Release Liner kann auch bei den zuvor beschriebenen Verfahren zum Einsatz gelangen.

Das der Fig. 9 zu entnehmende Verfahren stellt eine Kombination des Verfahrens der Fig. 7 und 8 dar, ohne dass die mit der Vliesbahn kaschierte Deck- oder Dachbahn zuvor aufgewickelt wird. So wird von der Rolle 112 insbesondere das mehrschichtige Deckbahnmaterial abgezogen und erwärmt, um auf dieses das Vliesbahnmaterial zu kaschieren bzw. zu laminieren. Auf die so kaschierte Deckbahn wird sodann über die Einrichtung 116 das Klebstoffmaterial und sodann der Liner, der von der Rolle 118 abgezogen wird, aufgebracht. Entlang der Bahn können im erforderlichen Umfang Kühleinrichtungen, wie Kühlbänder, unterhalb der Deckbahn vorgesehen sein, um die Kühlung zu beschleunigen, eine Maßnahme, die auch bei den anderen zuvor beschriebenen Verfahren möglich ist.

Entsprechend der Bahnlänge werden sodann entsprechende Abschnitte des Schichtsystems abgetrennt und zu Fertigware verarbeitet, sei es als Bogenmaterial, sei es als Rollenmaterial.

Im nachfolgenden Ausführungsbeispiel werden zwei Abdecksysteme gleichen Aufbaus, bestehend aus folgenden Bestandteilen entsprechend Fig. 1, verglichen mit:
- derselben Rezepturzusammensetzung der Deckbahn 12
- demselben PET Vlieses 14 mit einer Grammatur von 180 bis 220 g/m² Folgende Änderungen weisen die beiden Abdecksysteme auf:
   - Abdecksystem A: 200 g/m² eines HMPSA, kautschuk-basiert, als Klebstoffmaterial
   - Abdecksystem B: 300 g/m² einer bituminösen Klebemasse gemäß der Erfindung

Die Probenvorbereitung sowie die Substratvorbereitung fanden in beiden Fällen simultan statt:
- Reinigung der Substratoberfläche mittels Aceton sowie mind. 5 min Ablüftungszeit
- Abziehen der Schutzfolie bzw. -liners und Aufsetzen des Abdecksystems mit der Klebstoffoberfläche auf das zuvor gereinigte Substrat
- Andrücken mittels einer Stahlrolle von 5 kg.

Beide Systeme werden auf deren Schälfestigkeiten zum Substrat - Edelstahl - nach verschiedenen Lagerbedingungen verglichen gemäß DIN EN 12316-2, wobei die Werte in N/5 cm widergegeben werden:

| Substrat/Lagerbedingung | Nach 24 h Verklebungszeit bei Raumtemperatur | Bruchbild | Verklebt, nach 4 Wochen bei 80°C, 24 h bei Raumtemperatur | Bruchbild |
|---|---|---|---|---|
| Abdecksystem A | 37 N/5 cm | Adhäsiv | 25 N/5 cm | Adhäsiv |
| Abdecksystem B | 29 N/5 cm | Adhäsiv | 65 N/5 cm | Kohäsiv |

Die Ergebnisse erläutern die in der Beschreibung zuvor erläuterten Ergebnisse, indem sowohl das Versagens- oder Bruchbild sich für das Abdecksystem B deutlich von einem Adhäsionsbruch in Richtung eines Kohäsionsbruch verschieben, wohingegen Abdecksystem A dem Adhäsionsbruch treu bleibt. Weiterhin unterstreicht der Anstieg der Schälwerte nach Lagerung bei erhöhten Temperaturen für Abdecksystem B den Vorteil gegenüber in Abdecksystem A verwendeten HMPSA bezüglich Wärmefestigkeit als auch Erhöhung der Schälwerte und dem Verstrammen der Klebstoffmasse.

Die Prüfung nach 4 Wochen bei 80 °C im verklebten Zustand wird angewandt, um eine Alterung bzw. Verlegung des Abdecksystems künstlich zu beschleunigen.

In einem zweiten Beispiel werden zwei Abdecksysteme gleichen Aufbaus bestehend, aus folgenden Bestandteilen entsprechend Fig. 1, verglichen:
- selbe Rezepturzusammensetzung der Deckbahn 12
- selbe Deckschichtdicke bzw. effektive bzw. wirksame Dicke der Deckbahn liegt im Bereich zwischen 1,2 mm und 1,8 mm
- selbe Glasvlieseinlage mit einem Flächengewicht zwischen 25 g/m² und 75 g/m²
- selbe Klebstoffrezeptur sowie Grammatur G_{B} mit 600 g/m² < G_{B} < 800 g/m²

Folgende Änderungen weisen die beiden Abdecksysteme auf:
- Abdecksystem C: keine Vliesschicht zwischen Klebstoff- und Deckschicht
- Abdecksystem D: PET Vlieses 14 mit einer Grammatur von 180 bis 220 g/m² gemäß der Erfindung zwischen Klebstoffschicht und Deckschicht.

Die Probenvorbereitung sowie die Substratvorbereitung fanden in beiden Fällen simultan nach DIN EN 13416 statt.

Beide Systeme werden auf deren Bestimmung des Widerstandes gegen stoßartige Belastung gemäß DIN EN 12691:2018 auf einem harten Auflager (Verfahren A, Aluminiumplatte) untersucht, wobei die Einheiten jeweils in mm anzugeben sind. In verschärfter Form des Verfahrens wird die Oberfläche mittels Eis(platte) auf ca. 0°C heruntergekühlt und ebenfalls im bekannten Perforationstest bewertet.

| Substrat/Lagerbedingung | Standardverfahren, hartes Auflager, Aluminiumplatte, maximal bestandene Höhe [mm] | Oberfläche auf 0°C herunterkühlen, hartes Auflager, Aluminiumplatte, maximal bestandene Höhe [mm] |
|---|---|---|
| Abdecksystem C | 900 mm | 1000 mm |
| Abdecksystem D | 1250 mm | 1250 mm |

Die Ergebnisse erläutern eine verbesserte Beständigkeit gegen Perforation ≥ 25 % für erfindungsgemäße Variante D. Weiterhin sind auch für jene Klebstoffschicht die positiven Eigenschaften wie im Abdecksystem A gegeben.

Laut DIN EN 12691:2018 gilt eine Höhe als bestanden, soweit mindestens 4 von 5 Probekörper die Prüfungen bestehen, d.h. keine Undichtigkeit der Dachabdichtungsbahn festgestellt wird.

Das Herabkühlen der Oberfläche auf 0°C simuliert das Verhalten im Verlegezustand beispielsweise bei winterlichen/frühjährlichen Temperaturen, bei der in frühen Morgenstunden die Temperatur der Bahn auf 0°C abkühlen kann.

## Patentansprüche

1. Abdeckschichtsystem (10), umfassend eine ein- oder mehrschichtige Deckbahn (12), wie Dachbahn, eine mit dieser verbundene Vliesschicht (14) sowie eine mit dieser verbundene bituminöse Klebstoffschicht (16) oder aus diesen bestehend, **dadurch gekennzeichnet,**
**dass** das Abdeckschichtsystem (10) eine gesonderte Sperrfolie nicht aufweist, und dass die Vliesschicht (14) zumindest eine Vliesschicht aus der Gruppe mechanisch verfestigte Vliesschicht auf Synthesefasernbasis oder eine Kombination einer mechanisch verfestigten Vliesschicht auf Synthesefasernbasis und einer Glasfaservliesschicht oder eine Vliesschicht aus Synthesefasern und Glasfasern ist oder diese enthält, wobei die Vliesschicht mit der Deckbahn (12) durch Eindringen von Material der Deckbahn mit dieser verbunden ist.

2. Abdeckschichtsystem nach Anspruch 1,
**dadurch gekennzeichnet,**
**dass** die Vliesschicht (14) eine Grammatur G mit 50 g/m² < G < 300 g/m², insbesondere 150 g/m² < G < 220 g/m², insbesondere eine Nadelvliesschicht eine Dicke Dv bei Grammaturen G mit 150 g/m² ≤ G ≤ 250 g/m², insbesondere 150 g/m² ≤ G ≤ 220 g/m² zwischen 1,4 mm und 2,1 mm, insbesondere zwischen 1,6 mm und 1,9 mm aufweist.

3. Abdeckschichtsystem nach Anspruch 1 oder 2,
**dadurch gekennzeichnet,**
**dass** die Vliesschicht (14) eine Zugfestigkeit [N/50 mm] in Längsrichtung von mehr als 300 und/oder in Querrichtung von mehr als 350 und/oder eine Dehnung ε in Längsrichtung mit ε > 45 % und/oder in Querrichtung mit ε > 45 % aufweist, gemessen gemäß Norm EN 29073-3.

4. Abdeckschichtsystem nach zumindest einem der vorhergehenden Ansprüche, **dadurch gekennzeichnet,**
**dass** die mechanisch verfestigte Vliesschicht (14) besteht aus oder enthält Polyethylenterephthalat (PET), insbesondere mehr als 98 Gew.-%, und vorzugsweise zumindest ein Additiv, wie Titandioxid (TiO₂), vorzugsweise weniger als 0,5 Gew.-%, und/oder Antimontrioxid (Sb₂O₃), vorzugsweise weniger als 0,03 Gew.-%, wobei das Vlies vorzugsweise mit zumindest einem Harz, wie Furonharz, versehen ist.

5. Abdeckschichtsystem nach zumindest einem der Ansprüche 1 bis 4,
**dadurch gekennzeichnet,**
**dass** die Vliesschicht (14) auf Synthesefasern aus zumindest einem Material aus der Gruppe Polyester (PES), insbesondere Polyethylenterephthalat (PET), Polyethylen (PE), Polypropylen (PP), Polyacrilnitril (PAN), Viskose, Polyamid (PA), Copolymeren, Bikomponenten basierend auf Polyester (PES), Polypropylen (PP), Kombination dieser und/oder aus Fasermischungen basiert oder diese enthält, wobei die Vliessicht insbesondere besteht aus oder enthält Fasern aus Polyester und Polypropylen.

6. Abdeckschichtsystem nach zumindest einem der vorhergehenden Ansprüche, **dadurch gekennzeichnet,**
**dass** der bituminöse Klebstoff besteht aus oder enthält zumindest Straßenbaubitumen nach DIN EN 12591, vorzugsweise Bitumen 500/650 (gemäß EN 12591), verzweigte und/oder unverzweigte (Block-)Copolymere basierend auf Styrol und Butadien und/oder Isopren sowie gegebenenfalls Kohlenwasserstoffharze und/oder Fluxöle.

7. Abdeckschichtsystem nach zumindest einem der vorhergehenden Ansprüche, **dadurch gekennzeichnet,**
**dass** die bituminöse Schicht (16) eine Grammatur G_{B} mit 100 g/m² < G_{B} < 1000 g/m², insbesondere 500 g/m² < G_{B} < 750 g/m², und/oder eine Dicke D_{B} mit 0,10 mm < D_{B} < 1,00 mm, insbesondere 0,50 mm < D_{B} < 0,75 mm, aufweist.

8. Abdeckschichtsystem nach zumindest einem der vorhergehenden Ansprüche,
**dadurch gekennzeichnet,**
**dass** der Anteil an Bitumen zwischen 60 Gew.-% und 80 Gew.-% und/oder verzweigten und/oder unverzweigten Copolymeren basierend auf Styrol und Butadien zwischen 5 Gew.-% und 30 Gew.-% liegt und/oder der Anteil von Kohlenwasserstoffharz 0 Gew.-% oder bis 15 Gew.-% beträgt.

9. Abdeckschichtsystem nach zumindest einem der vorhergehenden Ansprüche, **dadurch gekennzeichnet,**
**dass** die Deckbahn (12) besteht aus oder enthält zumindest ein Material aus der Gruppe PVC (Polyvinylchlorid), TPE (Thermoplastisches Elastomer), TPO (Thermoplastischer Elastomer auf Olefinbasis) oder FPO (Flexibles Polyolefin), TPV (Thermoplastisches Vulkanisat), EPDM (Ethylen-Propylen-Dien-Kautschuk), EVA (Ethylenvinylacetat), Fluorpolymere wobei bevorzugterweise die Deckbahn (12) eingefärbt ist, insbesondere in dunklen Farbtönen, wie anthrazit oder titangrau oder schwarz.

10. Abdeckschichtsystem nach zumindest einem der vorhergehenden Ansprüche, **dadurch gekennzeichnet,**
**dass** die Deckbahn (12) insbesondere drei Schichten mit einer eine Verstärkungsschicht (20) als vorzugsweise mittlere Schicht, wie Verstärkung oder Einlage, aufweist, wobei insbesondere die Verstärkungsschicht (20) zumindest eine Verstärkung oder Einlage aus der Gruppe Gewebe, Gelege, Vlies, Gitter, Maschenware oder eine beliebige Kombination von diesen ist oder enthält, wobei die Verstärkung aus Fäden, wie Glasfäden und/oder Synthesefäden, besteht oder diese enthält.

11. Abdeckschichtsystem nach zumindest einem der vorhergehenden Ansprüche,
**dadurch gekennzeichnet,**
**dass** auf die bituminöse Klebstoffschicht (16) eine Silikonisierung aufweisende Schutzfolie (17) aufgebracht ist, die insbesondere in einer in Längsrichtung verlaufenden und senkrecht zur von dem Abdeckschichtsystem aufgespannten Ebene vor Aufbringen auf die Klebstoffschicht eine Erhöhungen und Vertiefungen aufweisende Wellenform aufweist.

12. Verfahren zur Herstellung eines Abdeckschichtsystems (10), umfassend eine mehrschichtige Deckbahn (12), eine Vliesschicht (14) und eine, gegebenenfalls streifenförmig ausgebildete, Klebeschicht (16) aus bituminösem Material, insbesondere nach zumindest einem der Ansprüche 1 - 11, umfassend zumindest die Verfahrensschritte:
- Bereitstellen einer Rolle (146) von Material einer ersten Schicht (18) der Deckbahn (12) oder Material der ersten Schicht enthaltend,
- Bereitstellen einer Rolle (214) von Material der Vliesschicht,
- Abziehen von dem Deckbahnmaterial und dem Vliesschichtmaterial von den Rollen,
- Führen sowohl des abgezogenen Deckbahnmaterials als auch des Vliesschichtmaterials durch einen von zwei sich drehenden Walzen (148, 150) begrenzten ersten Spalt bei gleichzeitigem Extrudieren von Material einer weiteren Schicht der Deckbahn zwischen die in den ersten Spalt eintretenden Materialien der ersten Schicht und der Vliesschicht.

13. Verfahren nach Anspruch 12,
**dadurch gekennzeichnet,**
**dass** vor Zuführen der ersten Schicht (18) des Deckbahnmaterials zu dem Spalt von einer Rolle ein eine Verstärkungsschicht (20) bildendes Verstärkungsmaterial abgezogen und durch ein von zwei zweiten Walzen (140, 142) begrenzten zweiten Spalt geführt wird bei gleichzeitigem Extrudieren von dem Material der ersten Schicht auf das durch den zweiten Spalt zu ziehende Verstärkungsmaterial, wobei insbesondere das Extrudieren in Richtung des zweiten Spaltes erfolgt.

14. Verfahren nach Anspruch 12 oder 13,
**dadurch gekennzeichnet,**
**dass** nach Verbinden des Vliesschichtmaterials mit dem Deckbahnmaterial auf das Vliesmaterial die Klebeschicht flächig oder streifenförmig aufgebracht wird.

15. Verfahren zur Herstellung eines Abdeckschichtsystems (10) umfassend eine mehrschichtige Deckbahn (12), eine Vliesschicht (14) und eine, gegebenenfalls streifenförmig ausgebildete, Klebeschicht (16) aus bituminösem Material, nach zumindest einem der Ansprüche 1 - 11, umfassend zumindest die Verfahrensschritte:
- Bereitstellen einer Rolle (112) Deckbahnmaterial und einer Rolle Vliesschichtmaterial,
- Abziehen von dem Deckbahnmaterial und dem Vliesschichtmaterial von den Rollen,
- Auflaminieren des Vliesschichtmaterials auf das Deckbahnmaterial,
- entweder Aufwickeln des mit dem Vliesschichtmaterial kaschierten Deckbahnmaterials, anschließendem Abziehen des kaschierten Deckbahnmaterials von der Rolle und Auftragen von Klebeschichtmaterial und Aufbringen einer Schutzfolie auf so gebildete Klebeschicht,
- oder nach Auflaminieren der Vliesschicht Weiterfördern des aufkaschierten Deckbahnmaterials und anschließendes Auftragen von Klebeschichtmaterial und Abdecken der so gebildeten Klebeschicht mit der Schutzfolie.

16. Verfahren zur Herstellung eines Abdeckschichtsystems nach zumindest einem der Ansprüche 12 oder 15,
**dadurch gekennzeichnet,**
**dass** auf die freie Oberfläche der Klebeschicht eine Schutzfolie (17) aufgebracht wird oder vor Aufbringung auf das Vliesschichtmaterial aufgebracht ist, die insbesondere eine Migration flüchtiger Bestandteile aus der Klebeschicht (16) verhindert oder zumindest hemmt, wobei vorzugsweise als Schutzfolie eine solche benutzt wird, die beim Verbinden mit der Klebeschicht zunächst mit dieser punktuell, linien- und streifenförmig kontaktiert wird, um durch Druckbeaufschlagung zwischen der Schutzfolie und der Klebeschicht vorhandene Luft zu entfernen und sodann vollflächig die Folie mit der Klebeschicht zu verbinden.

## Claims

1. A cover layer system (10) comprising or consisting of a single-layer or multi-layer cover membrane (12), such as a roofing membrane, a non-woven layer (14) connected thereto, and a bituminous adhesive layer (16) connected thereto,
**characterized in that**
the cover layer system (10) does not comprise a separate barrier film, and **in that** the non-woven layer (14) is or contains at least one non-woven layer from the group including a mechanically bonded non-woven layer based on synthetic fibres or a combination of a mechanically bonded non-woven layer based on synthetic fibres and a glass-fibre non-woven layer or a non-woven layer made up of synthetic fibres and glass fibres, wherein the non-woven layer is connected to the cover membrane (12) by penetration of material of the cover membrane.

2. The cover layer system according to claim 1,
**characterized in that**
the non-woven layer (14) has a grammage G of 50 g/m² < G < 300 g/m², in particular 150 g/m² < G < 220 g/m², in particular a fibre-bonded layer has a thickness Dv at grammages G of 150 g/m² ≤ G ≤ 250 g/m², in particular 150 g/m² ≤ G ≤ 220 g/m² between 1.4 mm and 2.1 mm, in particular between 1.6 mm and 1.9 mm.

3. The cover layer system according to claim 1 or 2,
**characterized in that**
the non-woven layer (14) has a tensile strength [N/50 mm] in the longitudinal direction of greater than 300 and/or in the transverse direction of greater than 350 and/or an elongation ε in the longitudinal direction where ε > 45% and/or in the transverse direction where ε > 45%, measured in accordance with the EN 29073-3 standard.

4. The cover layer system according to at least one of the preceding claims,
**characterized in that**
the mechanically bonded non-woven layer (14) consists of or contains polyethylene terephthalate (PET), in particular greater than 98 wt.%, and preferably at least one additive, such as titanium dioxide (TiO₂), preferably less than 0.5 wt.%, and/or antimony trioxide (Sb₂O₃), preferably less than 0.03 wt.%, wherein the non-woven fabric is preferably provided with at least one resin, such as furan resin.

5. The cover layer system according to at least one of claims 1 to 4,
**characterized in that**
the non-woven layer (14) is based on or contains synthetic fibres made of at least one material from the group of polyester (PES), in particular polyethylene terephthalate (PET), polyethylene (PE), polypropylene (PP), polyacrylonitrile (PAN), viscose, polyamide (PA), copolymers, bicomponents based on polyester (PES), polypropylene (PP), combinations thereof and/or fibre mixtures, wherein the non-woven layer in particular consists of or contains fibres made of polyester and polypropylene.

6. The cover layer system according to at least one of the preceding claims,
**characterized in that**
the bituminous adhesive consists of or contains at least paving grade bitumen in accordance with DIN EN 12591, preferably bitumen 500/650 (in accordance with EN 12591), branched and/or unbranched (block) copolymers based on styrene and butadiene and/or isoprene as well as optionally hydrocarbon resins and/or flux oils.

7. The cover layer system according to at least one of the preceding claims,
**characterized in that**
the bituminous layer (16) has a grammage G_{B} of 100 g/m² < G_{B} < 1000 g/m², in particular 500 g/m² < G_{B} < 750 g/m², and/or a thickness D_{B} of 0.10 mm < D_{B} < 1.00 mm, in particular 0.50 mm < D_{B} < 0.75 mm.

8. The cover layer system according to at least one of the preceding claims,
**characterized in that**
the proportion of bitumen is between 60 wt.% and 80 wt.% and/or the proportion of branched and/or unbranched copolymers based on styrene and butadiene is between 5 wt.% and 30 wt.% and/or the proportion of hydrocarbon resin is 0 wt.% or up to 15 wt.%.

9. The cover layer system according to at least one of the preceding claims,
**characterized in that**
the cover membrane (12) consists of or contains at least one material from the group of PVC (polyvinyl chloride), TPE (thermoplastic elastomer), TPO (thermoplastic olefin-based elastomer) or FPO (flexible polyolefin), TPV (thermoplastic vulcanisate), EPDM (ethylene propylene diene rubber), EVA (ethylene vinyl acetate) and fluoropolymers, wherein the cover membrane (12) is preferably coloured, in particular in dark hues such as anthracite, titanium grey or black.

10. The cover layer system according to at least one of the preceding claims,
**characterized in that**
the cover membrane (12) comprises in particular three layers, with a reinforcement layer (20) preferably as the middle layer, such as a reinforcement or insert, wherein, in particular, the reinforcement layer (20) is or contains at least one reinforcement or insert from the group of woven fabric, laid webs, non-woven fabric, meshes, knitted fabric or any combination thereof, wherein the reinforcement consists of or contains threads, such as glass threads and/or synthetic threads.

11. The cover layer system according to at least one of the preceding claims,
**characterized in that**
a protective film (17) having siliconisation is applied to the bituminous adhesive layer (16) and has, before being applied to the adhesive layer, an undulating shape comprising raised portions and depressions in particular in a plane extending in the longitudinal direction and spanned perpendicularly to the cover layer system.

12. A method for producing a cover layer system (10), comprising a multi-layer cover membrane (12), a non-woven layer (14) and an optionally strip-shaped adhesive layer (16) made of bituminous material, according to at least one of claims 1-11, comprising at least the method steps of
- providing a roll (146) of material of a first layer (18) of the cover membrane (12) or containing material of the first layer,
providing a roll (214) of material of the non-woven layer,
- unrolling the cover membrane material and the non-woven layer material from the rolls,
- guiding both the unrolled cover membrane material and the non-woven layer material through a first gap delimited by two rotating rollers (148, 150) while simultaneously extruding material of a further layer of the cover membrane between the materials of the first layer and the non-woven layer entering the first gap.

13. The method according to claim 12,
**characterized in that**
before feeding the first layer (18) of the cover membrane material to the gap, a reinforcement material forming a reinforcement layer (20) is unrolled from a roll and is guided through a second gap delimited by two second rollers (140, 142) while simultaneously extruding the material of the first layer onto the reinforcement material to be drawn through the second gap, wherein, in particular, the extruding is carried out in the direction of the second gap.

14. The method according to claim 12 or 13,
**characterized in that**
after connecting the non-woven layer material to the cover membrane material, the adhesive layer is applied to the non-woven material in a planar or strip-shaped manner.

15. The method for producing a cover layer system (10) comprising a multi-layer cover membrane (12), a non-woven layer (14) and an optionally strip-shaped adhesive layer (16) made of bituminous material, according to at least one of claims 1-11, comprising at least the method steps of:
- providing a roll (112) of cover membrane material and a roll of non-woven layer material,
- unrolling the cover membrane material and the non-woven layer material from the rolls,
- laminating the non-woven layer material onto the cover membrane material,
- either rolling up the cover membrane material laminated with the non-woven layer material, then unrolling the laminated cover membrane material from the roll and applying adhesive layer material and applying a protective film to the thus formed adhesive layer,
- or, after laminating on the non-woven layer, conveying the laminated cover membrane material onwards and then applying adhesive layer material and covering the thus formed adhesive layer with the protective film.

16. The method for producing a cover layer system according to at least one of claims 12 or 15,
**characterized in that**
a protective layer (17) which in particular prevents or at least inhibits migration of volatile components from the adhesive layer (16) is applied to the free surface of the adhesive layer or a protective layer has been applied before application to the non-woven layer material, wherein a protective layer is preferably used of the kind which, when it is being connected to the adhesive layer, is first brought into contact therewith in a punctiform, linear and strip-shaped manner in order to remove any air between the protective film and the adhesive layer by applying pressure and to then connect the film to the adhesive layer over the entire surface.

## Revendications

1. Système de couches de recouvrement (10) comprenant une bande de recouvrement monocouche ou multicouche (12), telle qu'une bande de toit, une couche de non-tissé (14) reliée à celle-ci ainsi qu'une couche de colle bitumineuse (16) reliée à celle-ci ou constituée de ces dernières,
**caractérisé en ce**
**que** le système de couches de recouvrement (10) ne présente pas de film barrière spécifique et que la couche de non-tissé (14) est ou contient au moins une couche de non-tissé issue du groupe couche de non-tissé à base de fibres synthétiques consolidée mécaniquement ou une combinaison d'une couche de non-tissé à base de fibres synthétiques consolidée mécaniquement et d'une couche de non-tissé en fibres de verre ou une couche de non-tissé composée de fibres synthétiques et de fibres de verre, sachant que la couche de non-tissé avec la bande de recouvrement (12) est reliée par pénétration de la matière de la bande de recouvrement.

2. Système de couches de recouvrement selon la revendication 1,
**caractérisé en ce**
**que** la couche de non-tissé (14) présente un grammage G avec 50 g/m² < G < 300 g/m², en particulier 150 g/m² < G < 220 g/m², qu'en particulier une couche non tissée aiguilletée présente une épaisseur Dv pour des grammages G avec 150 g/m² ≤ G ≤ 250 g/m², en particulier 150 g/m² ≤ G ≤ 220 g/m², se situant entre 1,4 mm et 2,1 mm, en particulier entre 1,6 mm et 1,9 mm.

3. Système de couches de recouvrement selon la revendication 1 ou 2,
**caractérisé en ce**
**que** dans sa direction longitudinale, la couche de non-tissé (14) présente une résistance à la traction [N/50 mm] supérieure à 300 et/ou, dans sa direction transversale, supérieure à 350 et/ou un allongement ε dans la direction longitudinale avec ε > 45 % et/ou, dans la direction transversale, avec ε > 45 %, mesuré conformément à la norme EN 29073-3.

4. Système de couches de recouvrement selon au moins l'une des précédentes revendications,
**caractérisé en ce**
**que** la couche de non-tissé (14) consolidée mécaniquement comprend ou contient du polyéthylène téréphtalate (PET), en particulier plus de 98 % en poids, et de préférence au moins un additif tel que du dioxyde de titane (TiO₂), de préférence moins de 0,5 % en poids, et/ou du trioxyde d'antimoine (Sb₂O₃), de préférence moins de 0,03 % en poids, sachant que le non-tissé est revêtu de préférence d'au moins une résine, telle que de la résine furanique.

5. Système de couches de recouvrement selon au moins l'une des revendications 1 à 4, **caractérisé en ce**
**que** la couche de non-tissé (14) est basée sur des fibres synthétiques constituées d'au moins un matériau du groupe polyester (PES), en particulier polyéthylène téréphtalate (PET), polyéthylène (PE), polypropylène (PP), polyacrylonitrile (PAN), viscose, polyamide (PA), copolymères, bicomposants à base de polyester (PES), polypropylène (PP), combinaison de ces derniers et/ou de mélanges de fibres ou en contient, sachant que la couche de non-tissé comprend ou contient en particulier des fibres de polyester et de polypropylène.

6. Système de couches de recouvrement selon au moins l'une des précédentes revendications,
**caractérisé en ce**
**que** la colle bitumeuse comprend ou contient au moins du bitume routier conformément à la norme DIN EN 12591, de préférence du bitume 500/650 (conformément à la norme EN 12591), des copolymères (blocs) ramifiés et/ou non ramifiés à base de styrène et de butadiène et/ou d'isoprène ainsi que, le cas échéant, des résines hydrocarbonées et/ou des huiles de fluxage. |

7. Système de couches de recouvrement selon au moins l'une des précédentes revendications,
**caractérisé en ce**
**que** la couche bitumeuse (16) présente un grammage G_{B} avec 100 g/m² < G_{B} < 1000 g/m², en particulier 500 g/m² < G_{B} < 750 g/m², et/ou une épaisseur D_{B} avec 0,10 mm < D_{B} < 1,00 mm, en particulier 0,50 mm < D_{B} < 0,75 mm.

8. Système de couches de recouvrement selon au moins l'une des précédentes revendications,
**caractérisé en ce**
**que** la proportion de bitume représente entre 60 % en poids et 80 % en poids et/ou la proportion de copolymères ramifiés et/ou non ramifiés à base de styrène et de butadiène entre 5 % en poids et 30 % en poids et/ou que la proportion de résine hydrocarbonée est de 0 % en poids ou peut atteindre jusqu'à 15 % en poids.

9. Système de couches de recouvrement selon au moins l'une des précédentes revendications,
**caractérisé en ce**
**que** la bande de recouvrement (12) comprend ou contient au moins un matériau du groupe PVC (chlorure de polyvinyle), TPE (élastomère thermoplastique), TPO (élastomère thermoplastique à base d'oléfine) ou FPO (polyoléfine flexible), TPV (vulcanisat thermoplastique), EPDM (caoutchouc éthylène-propylène-diène), EVA (éthylène-acétate de vinyle), polymères fluorés, sachant que la bande de recouvrement (12) est de préférence colorée, en particulier dans des tons foncés, comme l'anthracite ou le gris titane ou le noir.

10. Système de couches de recouvrement selon au moins l'une des précédentes revendications,
**caractérisé en ce**
**que** la bande de recouvrement (12) présente en particulier trois couches avec une couche de renforcement (20), de préférence sous forme d'une couche centrale, telle qu'un renforcement ou un insert, sachant que la couche de renforcement (20) est ou contient en particulier au moins un renforcement ou un insert du groupe tissu, nappe, non-tissé, grille, tissu à mailles ou une combinaison quelconque de ces derniers, sachant que le renforcement est constitué de fils, tels que des fils de verre et/ou des fils synthétiques ou en contient.

11. Système de couches de recouvrement selon au moins l'une des précédentes revendications,
**caractérisé en ce**
**qu'**une feuille de protection (17) présentant un siliconage est appliquée sur la couche de colle bitumineuse (16) et, dans un plan projeté dans le sens longitudinal et perpendiculaire au plan projeté par le système de couches de recouvrement avant l'application sur la couche de colle, présente en particulier une forme ondulée présentant des saillies et des évidements.

12. Procédé de fabrication d'un système de couches de recouvrement (10), comprenant une bande de recouvrement (12) multicouche, une couche de non-tissé (14) et une couche de colle (16) éventuellement conçue sous forme de bande dans un matériau bitumeux, selon au moins l'une des revendications 1 - 11, comprenant au moins les étapes de procédé :
- mise à disposition d'un rouleau (146) de matériau d'une première couche (18) de la bande de recouvrement (12) ou contenant le matériau de la première couche,
- mise à disposition d'un rouleau (214) de matériau de la couche de non-tissé,
- retrait du matériau de la bande de recouvrement et du matériau de la couche de non-tissé des rouleaux,
- guider à la fois le matériau de la bande de recouvrement retiré et le matériau de la couche de non-tissé retiré à travers une première fente délimitée par deux cylindres (148, 150) en rotation, tout en extrudant simultanément le matériau d'une autre couche de la bande de recouvrement entre les matériaux de la première couche et de la couche de non-tissé pénétrant dans la première fente.

13. Procédé selon la revendication 12,
**caractérisé en ce**
**que**, avant d'amener la première couche (18) du matériau de la bande de recouvrement à la fente, un matériau de renforcement formant une couche de renforcement (20) est retiré d'un rouleau et est guidé à travers une seconde fente délimitée par deux seconds cylindres (140, 142), avec une extrusion simultanée du matériau de la première couche sur le matériau de renforcement à tirer à travers la seconde fente, sachant que l'extrusion s'effectue en particulier dans la direction de la seconde fente.

14. Procédé selon la revendication 12 ou 13,
**caractérisé en ce**
**qu'**après la liaison du matériau de la couche de non-tissé avec le matériau de la bande de recouvrement, la couche de colle est appliquée en surface ou en forme de bande sur le matériau de non-tissé.

15. Procédé de fabrication d'un système de couches de recouvrement (10) comprenant une bande de recouvrement multicouche (12), une couche de non-tissé (14) et une couche de colle (16) éventuellement conçue sous forme de bande dans un matériau bitumeux, selon au moins l'une des revendications 1 - 11, comprenant au moins les étapes de procédé :
- mise à disposition d'un rouleau (112) du matériau de la bande de recouvrement et d'un rouleau du matériau de la couche de non-tissé,
- retrait du matériau de la bande de recouvrement et du matériau de la couche de non-tissé des rouleaux,
- stratification du matériau de la couche de non-tissé sur le matériau de la bande de recouvrement,
- soit l'enroulement du matériau de bande de recouvrement contrecollé avec le matériau de la couche de non-tissé, puis le retrait du matériau de la bande de recouvrement contrecollée du rouleau et finalement l'application du matériau de la couche de colle et la pose d'un film de protection sur la couche de colle ainsi formée,
- soit, après stratification de la couche de non-tissé, la progression du matériau de la bande de recouvrement contrecollé, et finalement l'application du matériau de la couche de colle et le recouvrement de la couche de colle ainsi formée au moyen du film de protection.

16. Procédé de fabrication d'un système de couches de recouvrement selon au moins l'une des revendications 12 ou 15,
**caractérisé en ce**
**qu'**un film de protection (17) est appliqué sur la surface libre de la couche de colle ou est appliqué avant l'application sur le matériau de la couche de non-tissé, ledit film empêchant ou au moins inhibant en particulier une migration de composants volatils de la couche de colle (16), sachant qu'un film faisant de préférence office de film de protection est utilisé comme tel, lequel lors de la liaison avec la couche de colle est tout d'abord mis en contact avec cette dernière de manière ponctuelle, sous forme de lignes et de bandes, afin d'éliminer l'air présent entre le film de protection et la couche de colle par application d'une pression et lier ensuite sur toute la surface le film à la couche de colle.
